(19) Europäisches Patentamt
European Patent Office
Office européen des brevets

(11) **EP 3 852 052 A1**

(12) **EUROPEAN PATENT APPLICATION**
published in accordance with Art. 153(4) EPC

(43) Date of publication:
**21.07.2021 Bulletin 2021/29**

(51) Int Cl.:
*G06T 7/00* (2017.01)  *G06T 7/70* (2017.01)
*H04N 13/305* (2018.01)  *H04N 13/366* (2018.01)

(21) Application number: **19859228.9**

(22) Date of filing: **08.07.2019**

(86) International application number:
**PCT/JP2019/026985**

(87) International publication number:
**WO 2020/054193 (19.03.2020 Gazette 2020/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **11.09.2018 JP 2018169863**

(71) Applicant: **Sony Corporation
108-0075 Tokyo (JP)**

(72) Inventor: **ICHINOSE, Tsutomu
Tokyo 108-0075 (JP)**

(74) Representative: **D Young & Co LLP
120 Holborn
London EC1N 2DY (GB)**

(54) **INFORMATION PROCESSING APPARATUS, INFORMATION PROCESSING METHOD, AND PROGRAM**

(57)    An information processing apparatus includes: an acquisition unit that performs face detection on the basis of a captured image and acquires face detection information including face frame information and viewpoint position information on the basis of a face detection result; a reference point calculation unit that calculates a reference point in a face frame indicated by the face frame information; and a correction unit that corrects the viewpoint position information according to a movement amount of the reference point.

*FIG. 8*

**Description**

TECHNICAL FIELD

The present disclosure relates to an information processing apparatus, an information processing method, and a program.

BACKGROUND ART

In recent years, a variety of technologies for displaying a stereoscopic image on a display have been proposed. Among these technologies, there is also a proposal regarding a so-called naked-eye stereoscopic display that does not use tools such as glasses. A lenticular technique using a lenticular lens is known as one of the naked-eye stereoscopic displays. In the lenticular technique, when a stereoscopic image is displayed on a display having a lenticular lens, the left and right viewpoint positions of the user (viewer/listener) are individually detected, and optimum light rays are converged on the detected viewpoint positions such that an image for the right eye and an image for the left eye are generated. As technologies for detecting the viewpoint positions of the user, an approach of predicting the viewing position in line with the motion of the user (for example, Patent Document 1 below) and an approach of detecting a feature point from an image and tracking the viewpoints by tracing the detected feature point (for example, Non-Patent Document 1 below) have been proposed.

CITATION LIST

PATENT DOCUMENT

Patent Document 1: Japanese Patent Application Laid-Open No. 2014-195141
Non-Patent Document 1: Jean-Yves Bouguet "Pyramidal Implementation of the Lucas Kanade Feature Tracker Description of the algorithm", Intel Corporation Microprocessor Research Labs (2000) OpenCV Documents

SUMMARY OF THE INVENTION

PROBLEMS TO BE SOLVED BY THE INVENTION

However, the approach of predicting the viewpoint positions has a disadvantage that an error occurs in the detection result for the viewpoint positions at the time of switching according to the movement amount. Furthermore, in the case of the approach utilizing the Lucas-Kanade algorithm described in Non-Patent Document 1, there is a disadvantage that some processing time is required.
One of the objects of the present disclosure is to provide, for example, an information processing apparatus, an information processing method, and a program that perform quick and stable tracking of a viewpoint position.

SOLUTIONS TO PROBLEMS

The present disclosure is, for example,
an information processing apparatus including:

an acquisition unit that performs face detection on the basis of a captured image and acquires face detection information including face frame information and viewpoint position information on the basis of a face detection result;
a reference point calculation unit that calculates a reference point in a face frame indicated by the face frame information; and
a correction unit that corrects the viewpoint position information according to a movement amount of the reference point.

The present disclosure is, for example,
an information processing method including:

performing, by an acquisition unit, face detection on the basis of a captured image and acquiring face detection information including face frame information and viewpoint position information on the basis of a face detection result;
calculating, by a reference point calculation unit, a reference point in a face frame indicated by the face frame information; and

correcting, by a correction unit, the viewpoint position information according to a movement amount of the reference point.

The present disclosure is, for example, a program that causes a computer to execute an information processing method including:

performing, by an acquisition unit, face detection on the basis of a captured image and acquiring face detection information including face frame information and viewpoint position information on the basis of a face detection result; calculating, by a reference point calculation unit, a reference point in a face frame indicated by the face frame information; and

correcting, by a correction unit, the viewpoint position information according to a movement amount of the reference point.

BRIEF DESCRIPTION OF DRAWINGS

Fig. 1 is a view illustrating an example of the external appearance of an information processing apparatus according to an embodiment.
Fig. 2 is a block diagram illustrating a system configuration example of the information processing apparatus according to the embodiment.
Fig. 3 is a block diagram illustrating a configuration example of a viewpoint detection unit according to a first embodiment.
Figs. 4A to 4C are diagrams referred to when an action example of a face detection unit and a center-of-gravity calculation unit according to the first embodiment are explained.
Figs. 5A and 5B are diagrams referred to when an outline of an action example of a correction unit according to the first embodiment is explained.
Fig. 6 is a timing chart referred to when an action example of the correction unit according to the first embodiment is explained.
Fig. 7 is a flowchart illustrating a flow of a process performed by the viewpoint detection unit according to the first embodiment.
Fig. 8 is a diagram for explaining an example of an effect obtained in the first embodiment.
Figs. 9A and 9B are diagrams referred to when a modification of the first embodiment is explained.
Fig. 10 is a block diagram illustrating a configuration example of a viewpoint detection unit according to a second embodiment.
Fig. 11 is a flowchart illustrating a flow of a process performed by the viewpoint detection unit according to the second embodiment.
Fig. 12 is a block diagram illustrating a configuration example of a viewpoint detection unit according to the second embodiment.
Fig. 13 is a flowchart illustrating a flow of a process performed by a distance measuring unit according to a third embodiment.
Fig. 14 is a flowchart illustrating a flow of a process performed by a viewpoint detection unit according to the third embodiment.
Fig. 15 is a diagram illustrating an outlined overall configuration of a surgery room system.
Fig. 16 is a diagram illustrating a display example of an operation screen on a centralized operation panel.
Fig. 17 is a diagram illustrating an example of how a surgery is conducted while the surgery room system is applied.
Fig. 18 is a block diagram illustrating an example of functional configurations of a camera head and a camera control unit (CCU) illustrated in Fig. 17.

MODE FOR CARRYING OUT THE INVENTION

Hereinafter, embodiments and the like according to the present disclosure will be described with reference to the drawings. Note that the description will be given in the following order.

<First Embodiment>

<Second Embodiment>

<Third Embodiment>

<Modifications>

<Application Example>

The embodiments and the like to be described below are suitable specific examples according to the present disclosure and the content of the present disclosure is not limited to these embodiments and the like.

<First Embodiment>

[Example of External Appearance of Information Processing Apparatus]

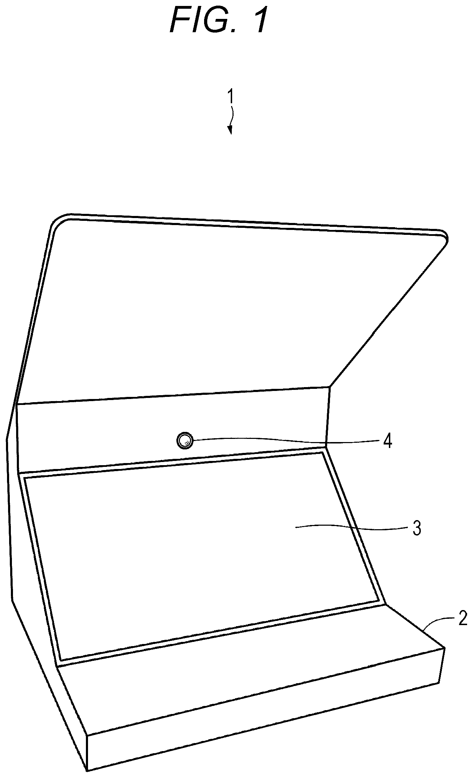

Fig. 1 is a view illustrating an example of the external appearance of an information processing apparatus (information processing apparatus 1) according to an embodiment. The information processing apparatus 1 has, for example, about the same size as a notebook personal computer, but can be miniaturized or scaled up.
The information processing apparatus 1 includes a base 2 and a display 3 erected upward from the base 2. The information processing apparatus 1 includes a camera 4 on an upper side of the display 3, and is configured such that the camera 4 can image a user located in front of the display 3.
The information processing apparatus 1 is capable of displaying a stereoscopic image on the display 3, for example, by a lenticular technique. In outlines, the viewpoint positions of a naked-eye user who does not use glasses or the like for stereoscopic display are detected using an image (captured image) captured by the camera 4. Images for the right eye and left eye (parallax images) are generated by light rays converged separately on left and right viewpoint positions, and the generated images are displayed on the display 3 mounted with a lenticular lens. This enables the user to view a stereoscopic image without using glasses, a head-up display (HUD), or the like.

[System Configuration Example of Information Processing Apparatus]

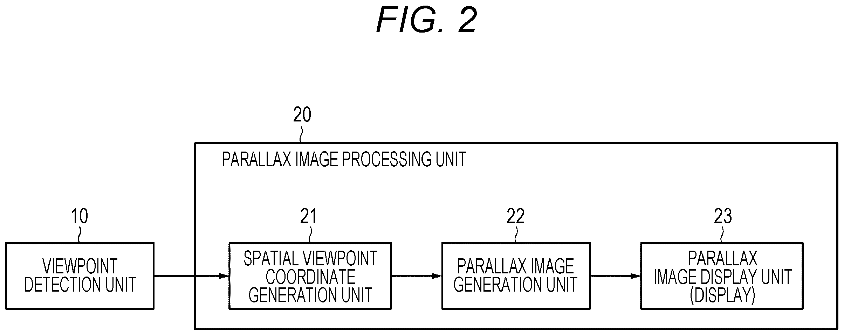

Fig. 2 is a block diagram illustrating a system configuration example of the information processing apparatus 1 according to the first embodiment. In outlines, the information processing apparatus 1 includes a viewpoint detection unit 10 and a parallax image processing unit 20. The viewpoint detection unit 10 outputs information indicating the viewpoint positions of the user, for example, coordinates of the viewpoint positions in two dimensions, to the parallax image processing unit 20 in the subsequent stage. Note that details of the configuration, action examples, and the like of the viewpoint detection unit 10 will be described later.
The parallax image processing unit 20 includes a spatial viewpoint coordinate acquisition unit 21, a parallax image acquisition unit 22, and a parallax image display unit 23. The spatial viewpoint coordinate acquisition unit 21 converts the two-dimensional coordinates indicating the viewpoint positions, which have been output from the viewpoint detection unit 10, into viewpoint coordinates of spatial positions by applying a known approach, and generates viewpoint coordinates in space. The parallax image acquisition unit 22 generates a stereoscopic image by generating light rays (images) corresponding to the viewpoint coordinates in space. For example, a configuration including the spatial viewpoint coordinate acquisition unit 21 and the parallax image acquisition unit 22 corresponds to a stereoscopic image acquisition unit in the claims. The parallax image display unit 23 is a device that presents a stereoscopic video by continuously displaying the parallax images generated by the parallax image acquisition unit 22, and corresponds to the display 3 described above.

[Configuration Example of Viewpoint Detection Unit]

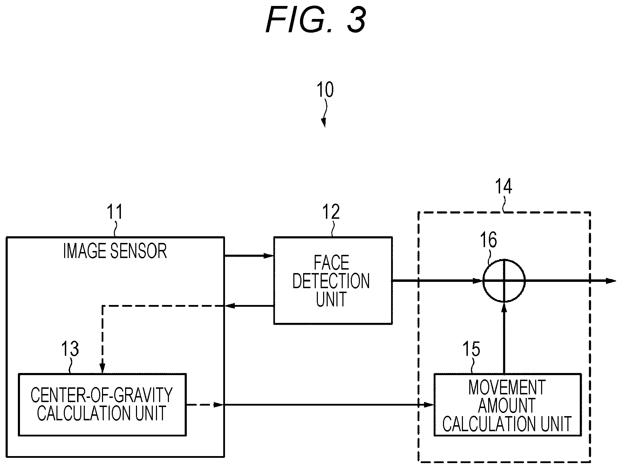

Fig. 3 is a block diagram illustrating a configuration example of the viewpoint detection unit 10 according to the first embodiment. The viewpoint detection unit 10 includes, for example, an image sensor 11, a face detection unit 12, a center-of-gravity calculation unit 13, and a correction unit 14. The correction unit 14 includes a movement amount calculation unit 15 and an addition unit 16.
The image sensor 11, which is an example of an imaging unit, is a complementary metal oxide semiconductor (CMOS) sensor, for example. As the image sensor 11, another sensor such as a charge coupled device (CCD) may be applied. The image sensor 11 images the user located in front of the display 3, more specifically, the user's face and surroundings, and acquires a captured image. The captured image acquired by the image sensor 11 is analog-to-digital (A/D) converted and then output. Note that, although illustration is omitted, an A/D converter or the like may be mounted in the image sensor 11 or may be provided between the image sensor 11 and the face detection unit 12. In addition, the image sensor 11 according to the embodiment is configured such that imaging at a high frame rate is allowed. As an example, the image sensor 11 is capable of imaging at 1000 frames per second (fps) or higher. In the description of the embodiment, it is assumed that the image sensor 11 is capable of imaging at 1000 fps.

The face detection unit 12, which is an example of an acquisition unit, performs face detection on the basis of the captured image acquired by the image sensor 11, and on the basis of the face detection result, generates and acquires face detection information including face frame information and viewpoint position information indicating the coordinates of the user's viewpoint positions in the captured image. Then, the face detection unit 12 outputs the face detection information to each of the center-of-gravity calculation unit 13 and the addition unit 16.

The center-of-gravity calculation unit 13, which is an example of a reference point calculation unit, calculates a center of gravity point (an example of a reference point) in a face frame indicated by the face frame information output from the face detection unit 12. In the present embodiment, the image sensor 11 includes the center-of-gravity calculation unit 13. For example, the image sensor 11 and a chip that execute the function of the center-of-gravity calculation unit 13 are stacked. This configuration can miniaturize the apparatus, but the center-of-gravity calculation unit 13 and the image sensor 11 may be separately configured.

The correction unit 14 corrects the viewpoint position information according to the movement amount of the center of gravity point. For example, the movement amount calculation unit 15 of the correction unit 14 calculates the movement amount of the center of gravity point calculated by the center-of-gravity calculation unit 13 between frames, in different terms, the displacement of the coordinates of the center of gravity point. Then, the addition unit 16 adds the movement amount of the center of gravity point to the viewpoint position information output from the face detection unit 12, whereby the viewpoint position information is corrected.

[Action Example of Information Processing Apparatus] (Action Example of Face Detection Unit and Center-of-Gravity Calculation Unit)

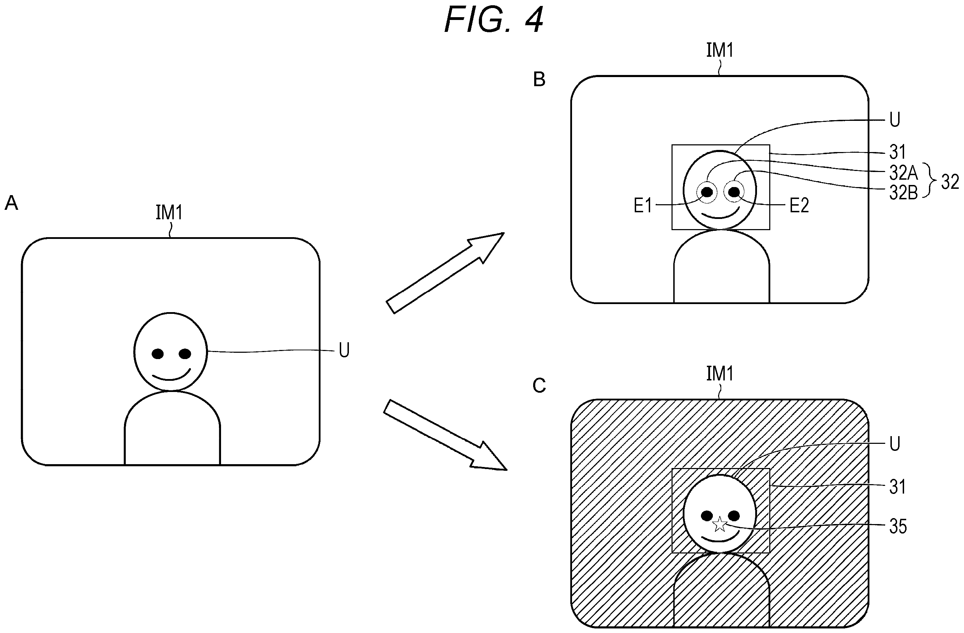

Next, an action example of the information processing apparatus 1 according to the first embodiment will be described. First, an action example of the face detection unit 12 and the center-of-gravity calculation unit 13 will be described with reference to Figs. 4A to 4C. Fig. 4A illustrates a captured image IM1, which is an example of an image captured by the image sensor 11. The captured image IM1 includes a user U.

The face detection unit 12 detects the face of the user U, using the captured image IM1. As a result of the face detection, a face frame 31 is set in an area including the face as illustrated in Fig. 4B, and the face frame information indicating the area of the face frame 31 is obtained. Note that, as a method for detecting the face, a known method such as a method of performing the face detection by utilizing a feature of an image can be applied. The face detection unit 12 outputs the face frame information to the center-of-gravity calculation unit 13.

Furthermore, the face detection unit 12 detects a right eye E1 and a left eye E2 of the user U, using the captured image IM1. The face detection unit 12 detects the right eye E1 and the left eye E2 of the user U by applying a known method such as template matching or a method using feature points. On the basis of the detection result, the face detection unit 12 generates the viewpoint position information including position information 32A, which is the coordinates of the right eye E1 in the screen, and position information 32B, which is the coordinates of the left eye E2 in the screen. The face detection unit 12 outputs the viewpoint position information to the addition unit 16. In this manner, the face detection information including the face frame information and the viewpoint position information can be obtained by the process performed by the face detection unit 12.

The center-of-gravity calculation unit 13 calculates the center of gravity point in the face frame with a predetermined face frame (for example, the face frame 31) corresponding to the face frame information supplied from the face detection unit 12 as an initial value. The calculation range for the center of gravity point is set, for example, to the area of a skin color component in the face frame. With this step, as illustrated schematically in Fig. 4C, a center of gravity point 35 of the face of the user U is detected. The search frame for the center of gravity point follows the distribution of the skin color area in the face frame. Therefore, when the face moves to the right side, the search frame also moves to the right along with the motion of the face.

Note that a certain processing time is required for the face detection unit 12 to acquire the face detection information. In contrast to this, since the center-of-gravity calculation unit 13 only needs to calculate the center of gravity point with a predetermined color component (the skin color component in this example) in the preset search as a target, the time required for the center-of-gravity calculation unit 13 to acquire the center of gravity point is shorter than the time required for the face detection unit 12 to acquire the face detection information. In other words, the process of calculating the center of gravity point performed by the center-of-gravity calculation unit 13 can be executed with almost no delay with respect to the input because the processing load is light.

(Action Example of Correction Unit)

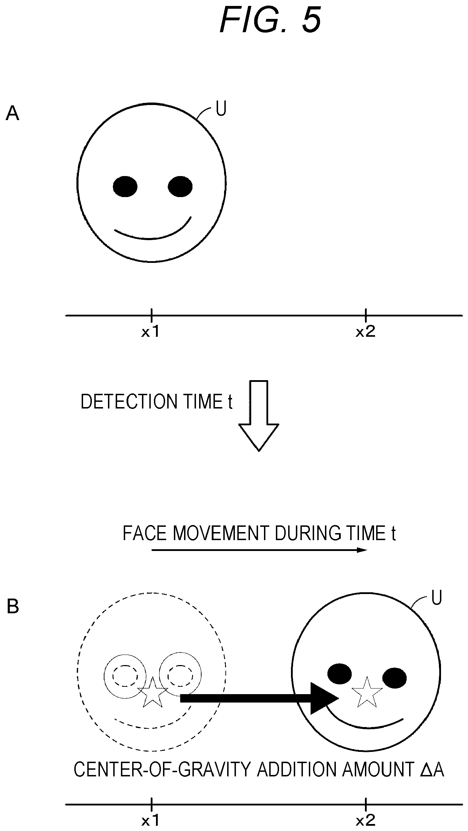

Next, an action example of the correction unit 14 will be described. An outline of an action example of the correction unit 14 will be described with reference to Figs. 5A and 5B. As illustrated in Fig. 5A, for example, a case where the captured image in which the user U is imaged at an x1 point on the X-axis is supplied to the face detection unit 12 will be considered. The face detection unit 12 detects the face frame and the viewpoint positions of the user U present at the x1 point, and generates and acquires the face detection information on the basis of the detection results. Here, the time (detection time) required for the face detection unit 12 to acquire the face detection information is assumed as t. After the detection time t has elapsed, the face detection unit 12 outputs the acquired face detection information.

However, there can be cases where the user U moves during the detection time t, and a discrepancy occurs between the viewpoint positions indicated by the viewpoint position information included in the output face detection information and the current viewpoint positions. For example, as schematically illustrated in Fig. 5B, when the user U moves from the x1 point to an x2 point during the detection time t, the viewpoint positions of both eyes detected by the face detection unit 12 are given as the past viewpoint positions the time t before, and deviate from the actual viewpoint positions (the viewpoint positions of the user U located at the x2 point). As described above, the viewpoint position information output by the face detection unit 12 contains a delay. Therefore, if the parallax image processing unit 20 in the subsequent stage generates parallax images on the basis only of the viewpoint positions in the viewpoint position information output by the face detection unit 12, the parallax images corresponding to the past viewpoint positions are generated, and accordingly there is a possibility that the stereoscopic image presented to the user U will be unnatural.

On the other hand, as described above, the process of calculating the center of gravity point can be performed in real time at a speed corresponding to a high frame rate (1000 fps in this example). Thus, as illustrated in Fig. 5B, for example, a movement amount $\Delta A$ of the center of gravity point when the user U moves from the x1 point to the x2 point is calculated. By adding this $\Delta A$ to the viewpoint position information at the x1 point, the viewpoint position information at the x2 point can be acquired in real time. Note that, in Fig. 5B, the center of gravity point is schematically indicated by a star mark.

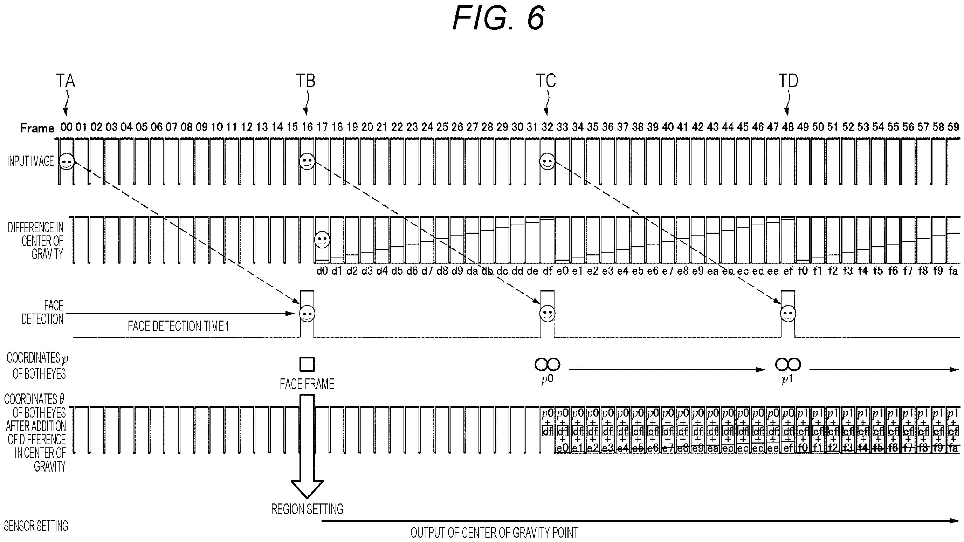

A more specific example will be described with reference to the timing chart in Fig. 6. In the example described below, the image sensor 11 acquires a captured image at 1000 fps. Furthermore, the time required for the face detection unit 12 to detect the face detection information is assumed as, for example, 16 milliseconds (ms). Sixteen frames are input within a period required until the face detection information is detected. Note that it is assumed that the center-of-gravity calculation unit 13 can calculate the center of gravity point every 1 ms.

As illustrated in Fig. 6, imaging is started at a predetermined timing TA, and a captured image including the face of the user U is input to the face detection unit 12. At a timing TB 16 ms after the timing TA, the face detection information is detected by the process of the face detection unit 12, and the user's viewpoint positions at the timing TA when the face frame was detected is detected.

The face frame information detected by the face detection unit 12 is supplied to the center-of-gravity calculation unit 13. The center-of-gravity calculation unit 13 calculates the center of gravity point in the face frame detected at the timing TB in real time until the next face detection information is detected by the face detection unit 12. Then, the center-of-gravity calculation unit 13 supplies the coordinates of the center of gravity point calculated in real time to the movement amount calculation unit 15. The movement amount calculation unit 15 calculates and accumulates the difference in the center of gravity, which is the movement amount of the center of gravity point, every 1 ms.

The movement amount calculation unit 15 calculates, for example, displacement of the center of gravity point in an X-axis direction and displacement of the center of gravity point in a Y-axis direction separately. Furthermore, for example, the movement amount is added in the case of leaving away from the coordinates of the center of gravity point at the timing TB, and conversely, the movement amount is subtracted in the case of approaching the coordinates of the center of gravity point at the timing TB. Note that, in Fig. 6, the difference in the center of gravity is indicated as increasing linearly, but when there is no motion of the user U during 16 ms, the difference in the center of gravity becomes zero.

Specifically, the movement amount calculation unit 15 calculates a difference in the center of gravity d0 between frames (between frames 16 and 17). Furthermore, the movement amount calculation unit 15 calculates a difference in the center of gravity d1 between frames (between frames 17 and 18). In a similar manner, the movement amount calculation unit 15 calculates d2, d3, ..., d9, da, db, ..., df, which are differences in the center of gravity. The movement amount calculation unit 15 supplies the final difference in the center of gravity df to the addition unit 16.

At a timing TC, which is a timing at which a frame 32 is input, the face detection information is detected and viewpoint position information p0 corresponding to the coordinates of both eyes is detected by the face detection unit 12. This viewpoint position information p0 represents the viewpoint positions of the user U at the timing TB 16 frames before. In other words, the viewpoint position information p0 is the viewpoint position information containing a delay. Thus, the addition unit 16 corrects the viewpoint position information p0 by adding the difference in the center of gravity df to the viewpoint position information p0, and acquires viewpoint position information corresponding to the current viewpoint positions. The corrected viewpoint position information is supplied from the addition unit 16 to the parallax image processing unit 20. The parallax image processing unit 20 uses the supplied viewpoint position information as tracking data, and generates and displays a stereoscopic image corresponding to the viewpoint positions indicated by this viewpoint position information.

The following processes are continuously performed. For example, from the timing TC to a timing TD at which the next face detection information is detected (a timing at which a frame 48 is input), the coordinates of the center of gravity for each frame are calculated, and the difference in the center of gravity between frames is accumulated. Viewpoint position information p1 detected at the timing TD is information indicating the viewpoint positions at the timing TC. Thus, the correction unit 14 adds the differences in the center of gravity df and ef to the viewpoint position information p0 at the timing TC, thereby acquiring viewpoint position information corresponding to the current viewpoint positions in which the delay is eliminated.

Note that a reset flag (for example, a logical value "1") is set at each timing when the face detection information is detected, and the accumulated differences in the center of gravity are reset. Then, the viewpoint position information at the timing when the reset flag is set is used as the viewpoint position information to be corrected.

[Flow of Process]

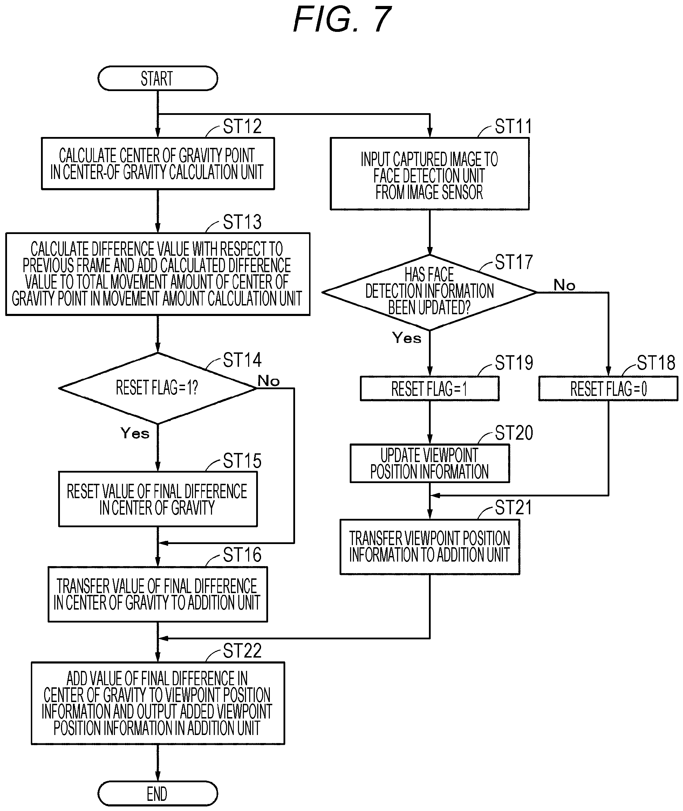

Next, the flow of a process performed by the viewpoint detection unit 10 according to the first embodiment will be described with reference to the flowchart in Fig. 7.

Once the process begins, a captured image is acquired via the image sensor 11, and the acquired captured image is supplied to the face detection unit 12 (step ST11). The face detection unit 12 generates the face detection information including the face frame information and the viewpoint position information on the basis of the captured image. The face frame information is supplied to the center-of-gravity calculation unit 13. The center-of-gravity calculation unit 13 calculates the center of gravity point of skin color components in a face frame corresponding to the face frame information (step ST12).

Then, the movement amount calculation unit 15 calculates the difference in the center of gravity, which is a difference value in positions between the center of gravity point calculated by the center-of-gravity calculation unit 13 and the center of gravity point calculated by the center-of-gravity calculation unit 13 for the previous frame, and adds the calculated difference in the center of gravity to the total movement amount of the center of gravity point (step ST13). With these steps, the movement amount of the center of gravity point is accumulated.

Then, it is determined whether or not the reset flag = 1 holds (step ST14). If the reset flag = 1 holds here, new face detection information is detected, and the face detection information used for the process is updated to the detected face detection information. When the reset flag = 1 is set, the value of the accumulated final difference in the center of gravity, in different terms, the value of the final difference in the center of gravity in the detection cycle for the face detection information, is reset (step ST15).

When the reset flag = 0 holds instead of the reset flag = 1, the value of the final difference in the center of gravity is transferred to the addition unit 16 (step ST16).

Furthermore, it is determined whether or not new face detection information has been detected after, for example, 16 ms has elapsed from the input timing of the captured image and the face detection information has been updated (step ST17). Such determination is made, for example, every 1 ms. When no new face detection information has been detected, the reset flag = 0 is set (step ST18).

When new face detection information has been detected by the face detection unit 12, the reset flag = 1 is set (step ST19). Then, the face frame information and the viewpoint position information included in the face detection information are updated such that the detected new face detection information is used in the subsequent processes (step ST20). Then, the updated viewpoint position information is transferred to the addition unit 16 (step ST21).

In the addition unit 16, the viewpoint position information is corrected by adding the value of the final difference in the center of gravity to the viewpoint position information. The corrected viewpoint position information is output (step ST22). Note that, although not illustrated, in the parallax image processing unit 20 in the subsequent stage, a stereoscopic image corresponding to the viewpoint positions indicated by the corrected viewpoint position information is generated.

[Example of Effects of First Embodiment]

According to the first embodiment, the viewpoint of the user at the current time point can be stably acquired in real time.

Furthermore, since the complicated algorithm described in Non-Patent Document 1 is not used, the viewpoint of the user at the current time point can be quickly acquired.

In addition, in a system in which a stereoscopic image can be viewed without using glasses or the like, the viewpoint positions can be appropriately tracked.

Besides, the approach of predicting the viewing positions is easily affected by noise as a disturbance factor, and furthermore, although the approach can exhibit an effect in the case of linear movement, there is a disadvantage that the prediction would become difficult because, for example, the user's motion is nonlinear and complicated, and also images to be displayed sometimes do not have a stationary update cycle. However, according to the present embodiment, such a disadvantage does not occur because no process for predicting the viewing positions is performed.

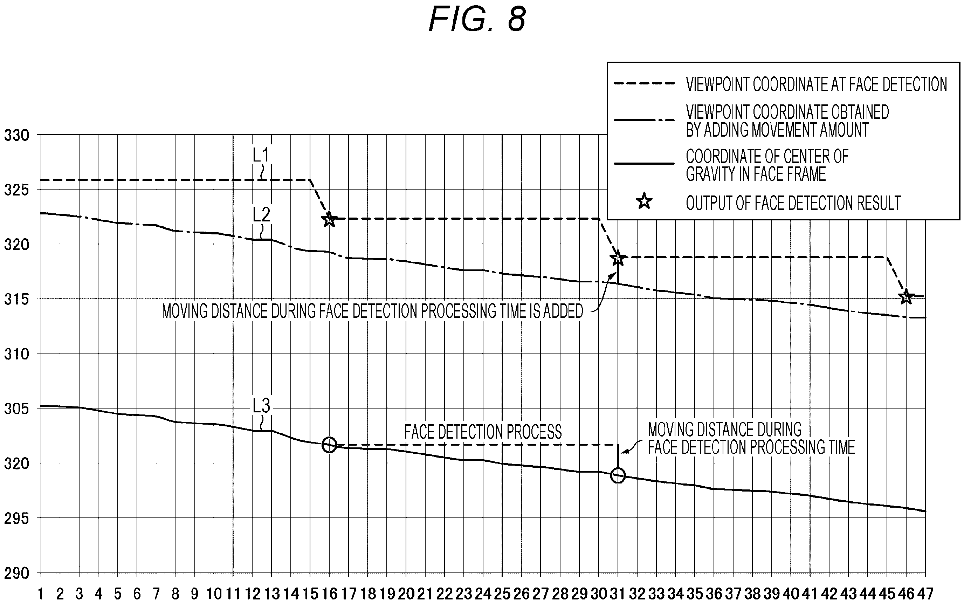

Fig. 8 is a diagram for explaining an example of the effect of the first embodiment. In the graph in Fig. 8, the horizontal axis indicates the number of frames, and the vertical axis indicates a coordinate (for example, the X coordinate). The dotted line L1 in the graph in Fig. 8 indicates the viewpoint coordinate indicated by the viewpoint position information in the face detection information. Furthermore, the dashed dotted line L2 indicates the viewpoint coordinate obtained by adding the movement amount of the center of gravity point, in other words, the corrected viewpoint position information. In addition, the solid line L3 indicates the coordinate of the center of gravity in the face frame.

As illustrated in the graph in Fig. 8, a distance moved by the coordinates of the center of gravity during the time required to detect the face detection information is added to the viewpoint coordinates at the face detection. Consequently, the current viewpoint coordinates indicating a smooth change similar to a change in the coordinates of the center of gravity can be acquired as tracking data.

Note that the center of gravity point calculated by the center-of-gravity calculation unit 13 is required to coincide with the center point of the face. However, in the example in which the face frame is updated at certain cycles as in the present embodiment, the skin color area in the face frame is likely to be discrete from the face frame in the input image. For this reason, when the difference between the center point and the center of gravity point of the face frame becomes a certain amount or greater, the face frame may be set again. Furthermore, the face frame may be updated regularly.

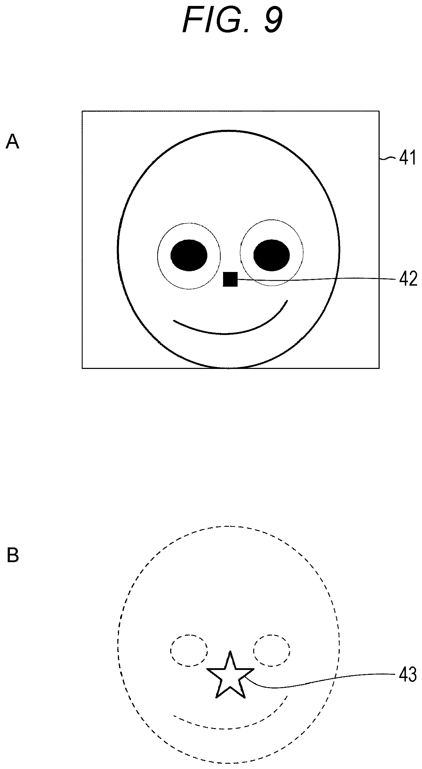

For example, as illustrated in Fig. 9A, the coordinates of a face center 42 in a face frame 41 are assumed as $\alpha(x_1, y_1)$. The coordinates $\alpha$ are calculated by, for example, the face detection unit 12. Furthermore, as illustrated in Fig. 9B, the coordinates of a center of gravity point 43 calculated by the center-of-gravity calculation unit 13 are assumed as $\beta(x_2, y_2)$. A Euclidean distance d between the two points can be worked out by following mathematical formula 1.

[Mathematical Formula 1]

$$d(\alpha, \beta) = \sqrt{(x_1 - x_2)^2 + (y_1 - y_2)^2} \qquad (1)$$

When the Euclidean distance d is given as, for example, $d \leq 50$, that is, when the two-dimensional spatial distance between the coordinates $\alpha$ of the face center 42 and the coordinates $\beta$ of the center of gravity point 43 matches 50 pixels or less, the face frame may be set again. By carrying out the setting of the search frame again, the center of gravity can be calculated in conjunction with face detection.

<Second Embodiment>

Next, a second embodiment will be described. Note that the matters described in the first embodiment can also be applied to the second embodiment unless otherwise mentioned. For example, with respect to the configuration and action of a parallax image processing unit 20, the content of the description given in the first embodiment can be applied to the second embodiment. Furthermore, the same configuration or the same quality configuration as the configuration described in the first embodiment will be denoted by the same reference signs, and duplicate description will be omitted as appropriate.

[Configuration Example of Viewpoint Detection Unit]

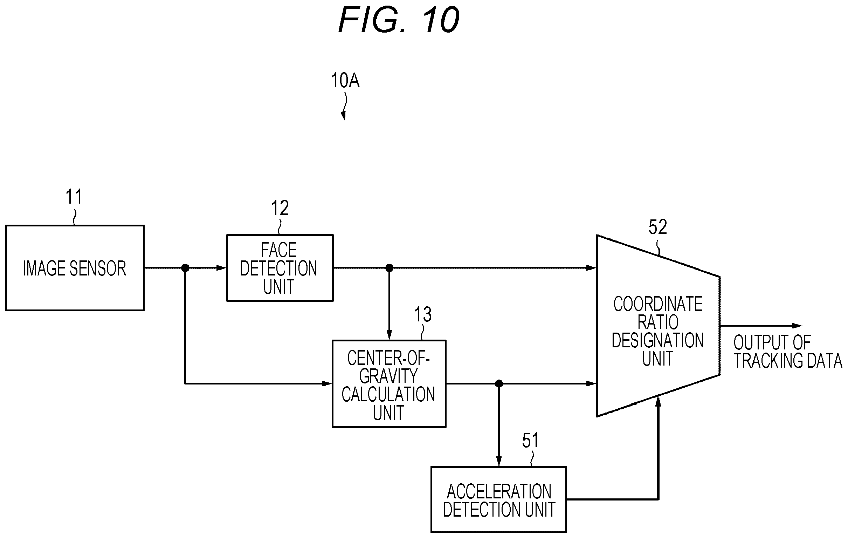

Fig. 10 is a block diagram illustrating a configuration example of a viewpoint detection unit (viewpoint detection unit 10A) according to the second embodiment. The viewpoint detection unit 10A includes, for example, an image sensor 11, a face detection unit 12, a center-of-gravity calculation unit 13, an acceleration detection unit 51, and a coordinate ratio designation unit 52. Since the image sensor 11, the face detection unit 12, and the center-of-gravity calculation unit 13 have been described in the first embodiment, duplicate description will be omitted as appropriate. Note that, in the second embodiment, the image sensor 11 and the center-of-gravity calculation unit 13 are configured separately, but as in the first embodiment, a configuration in which the image sensor 11 includes the center-of-gravity calculation unit 13 may be employed.

The face detection unit 12 generates the face detection information on the basis of the captured image, and outputs the face frame information and the viewpoint position information to the center-of-gravity calculation unit 13 and the coordinate ratio designation unit 52, respectively. The center-of-gravity calculation unit 13 calculates the center of gravity point in the face frame, and outputs the coordinates of the center of gravity point, which is the calculation result, to the acceleration detection unit 51 and the coordinate ratio designation unit 52.

The acceleration detection unit 51 holds the coordinates of the center of gravity point of, for example, the previous image, and computes the difference from the coordinates of the center of gravity point of the current image that has been input. This difference corresponds to the acceleration. The difference value obtained as a result of the computation is output to the coordinate ratio designation unit 52.

The coordinate ratio designation unit 52 designates a ratio (a weight to be set in each coordinate) for weighting and adding the coordinates of the viewpoint position indicated by the viewpoint position information and the coordinates of the center of gravity point, according to the difference value supplied from the acceleration detection unit 51. The coordinate ratio designation unit 52 generates the viewpoint position information to be output to the parallax image processing unit 20 by performing weighting addition using the designated ratio.

For example, when the difference value supplied from the acceleration detection unit 51 is large, that is, when a fast motion has been detected, the coordinate ratio designation unit 52 sets the ratio so as to increase the ratio of the coordinates of the center of gravity with excellent responsiveness. On the other hand, since it can be determined that there is little motion when the difference value is small, the ratio of the viewpoint position information included in the face detection information with high stability is increased. The high stability here means that the viewpoint position information included in the face detection information exactly represents the viewpoint positions, and has a higher accuracy than the viewpoint position information when the movement amount of the center of gravity point is added, which is a predicted value.

[Flow of Process]

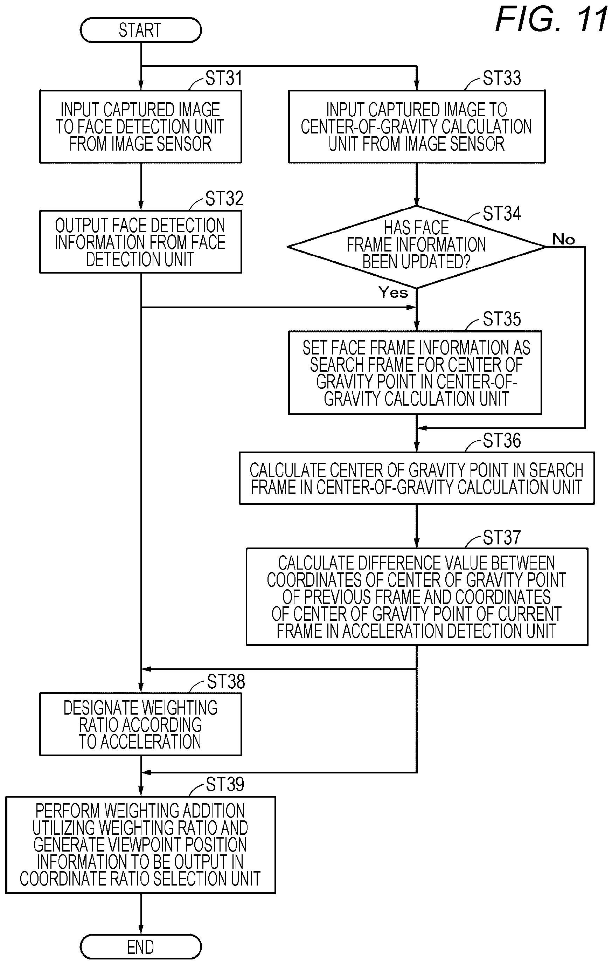

Next, the flow of a process performed by the viewpoint detection unit 10A according to the second embodiment will be described with reference to the flowchart in Fig. 11.

Once the process is started, a captured image obtained via the image sensor 11 is input to the face detection unit 12 (step ST31). Then, the face detection unit 12 acquires face detection information on the basis of the captured image, and outputs the acquired face detection information (step ST32).

Furthermore, the captured image obtained via the image sensor 11 is input to the center-of-gravity calculation unit 13 (step ST33). Then, the center-of-gravity calculation unit 13 determines whether or not the face frame information has been updated (step ST34). The center-of-gravity calculation unit 13 determines whether or not the face frame information has been updated, depending on whether or not new face frame information has been input from the face detection unit 12, for example.

When the face frame information has been updated, the center-of-gravity calculation unit 13 sets the coordinates indicated by the updated face frame information as a search frame for the center of gravity point (step ST35). Then, the center-of-gravity calculation unit 13 calculates the center of gravity point in the set face frame. Note that, when the face frame information has not been updated, the center-of-gravity calculation unit 13 calculates the center of gravity point using the face frame information up to that point as a search frame for the center of gravity point (step ST36). The center-of-gravity calculation unit 13 outputs the calculated coordinates of the center of gravity point to each of the acceleration detection unit 51 and the coordinate ratio designation unit 52.

The acceleration detection unit 51 calculates, for example, the difference value between the coordinates of the center of gravity point of the previous frame and the coordinates of the center of gravity point of the current frame. Then, the acceleration detection unit 51 outputs the calculated difference value to the coordinate ratio designation unit 52 (step ST37).

The coordinate ratio designation unit 52 designates the weighting ratio according to the difference value supplied from the acceleration detection unit 51 (step ST38). Then, the coordinate ratio designation unit 52 uses the weighting ratio to perform weighting addition on the viewpoint coordinates indicated by the viewpoint position information and the coordinates of the center of gravity point, and generates the viewpoint position information to be output (step ST39). Note that, although not illustrated, in the parallax image processing unit 20 in the subsequent stage, a stereoscopic image corresponding to the viewpoint positions indicated by the viewpoint position information output from the coordinate ratio designation unit 52 is generated.

According to the second embodiment described above, for example, the following effects can be obtained. The difference value of the center of gravity used when the acceleration is detected can catch the motion in the current frame instead of the prediction, such that the system can be constructed as a system with little response error. Furthermore, the current viewpoint position can be obtained with higher accuracy.

<Third Embodiment>

Next, a third embodiment will be described. Note that the matters described in the first and second embodiments can also be applied to the third embodiment unless otherwise mentioned. Furthermore, the same configuration or the same quality configuration as the configuration described in the first and second embodiments will be denoted by the same reference signs, and duplicate description will be omitted as appropriate.

[Configuration Example of Viewpoint Detection Unit]

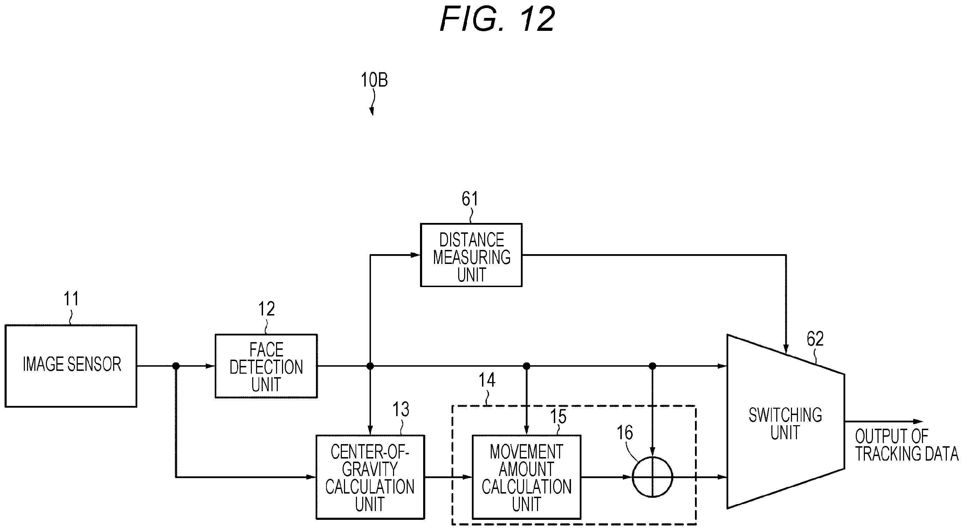

Fig. 12 is a block diagram illustrating a configuration example of a viewpoint detection unit (viewpoint detection unit 10B) according to the third embodiment. The viewpoint detection unit 10B includes, for example, an image sensor 11, a face detection unit 12, a center-of-gravity calculation unit 13, a correction unit 14, a distance measuring unit 61, and a switching unit 62. Similar to the first embodiment, the correction unit 14 includes a movement amount calculation unit 15 and an addition unit 16. Note that, in the third embodiment, the image sensor 11 and the center-of-gravity calculation unit 13 are configured separately, but as in the first embodiment, a configuration in which the image sensor 11 includes the center-of-gravity calculation unit 13 may be employed.

The viewpoint detection unit 10B according to the third embodiment is configured such that either the viewpoint position information included in the face detection information generated by the face detection unit 12 or the viewpoint position information corrected by the correction unit 14 is selectively output from the switching unit 62, according to the distance measurement result of the distance measuring unit 61 that measures the distance to a user who is the target for face detection. More specifically, a configuration is made to output the viewpoint position information corrected by the correction unit 14 from the switching unit 62 when the distance measurement result by the distance measuring unit 61 is smaller than a threshold value, and to output the viewpoint position information generated by the face detection unit 12 when the distance measurement result is greater than the threshold value.

The image sensor 11, the face detection unit 12, the center-of-gravity calculation unit 13, and the correction unit 14 perform the respective actions described in the first embodiment. With this configuration, the face detection unit 12 outputs the face detection information including the viewpoint position information. The face detection information (at least the viewpoint position information) output from the face detection unit 12 is supplied to each of the distance measuring unit 61 and the switching unit 62. Furthermore, the corrected viewpoint position information output from the addition unit 16 is supplied to the switching unit 62.

The distance measuring unit 61 measures the distance to the user U, using, for example, the viewpoint position information supplied from the face detection unit 12. For example, the distance measuring unit 61 derives an estimated distance when the interocular distance between the right eye and the left eye is assumed as 6.5 cm using the viewpoint position information, and outputs the distance measurement data indicating the estimated distance to the switching unit 62. Of course, the distance measuring unit 61 may perform the distance measurement using another approach. Furthermore, the distance measuring unit 61 may be a sensor such as a time-of-flight (ToF) or light detection and ranging (Lidar) sensor.

When the distance measurement result is smaller than the threshold value, in other words, when the user U is located at a position close to the information processing apparatus 1, the switching unit 62 selects and outputs the viewpoint position information corrected by the correction unit 14. Furthermore, when the distance measurement result is greater than the threshold value, in other words, when the user U is located at a position far from the information processing apparatus 1, the switching unit 62 selects and outputs the viewpoint position information generated by the face detection unit 12.

[Flow of Process]

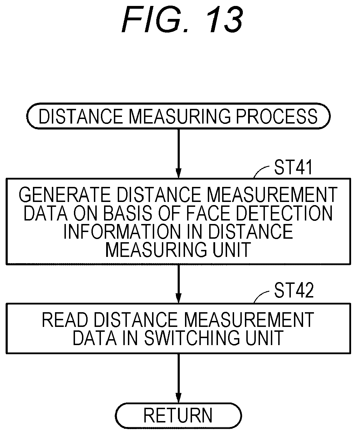

Next, the flow of a process performed by the viewpoint detection unit 10B according to the third embodiment will be described. First, the flow of a process (distance measuring process) performed by the distance measuring unit 61 will be described with reference to the flowchart illustrated in Fig. 13.

The distance measuring unit 61 generates distance measurement data on the basis of the face detection information supplied from the face detection unit 12. Then, the generated distance measurement data is output to the switching unit 62 (step ST41). The switching unit 62 reads the distance measurement data supplied from the distance measuring unit 61 (step ST42). These processes are performed every time the face detection information is supplied from the face detection unit 12 to the distance measuring unit 61.

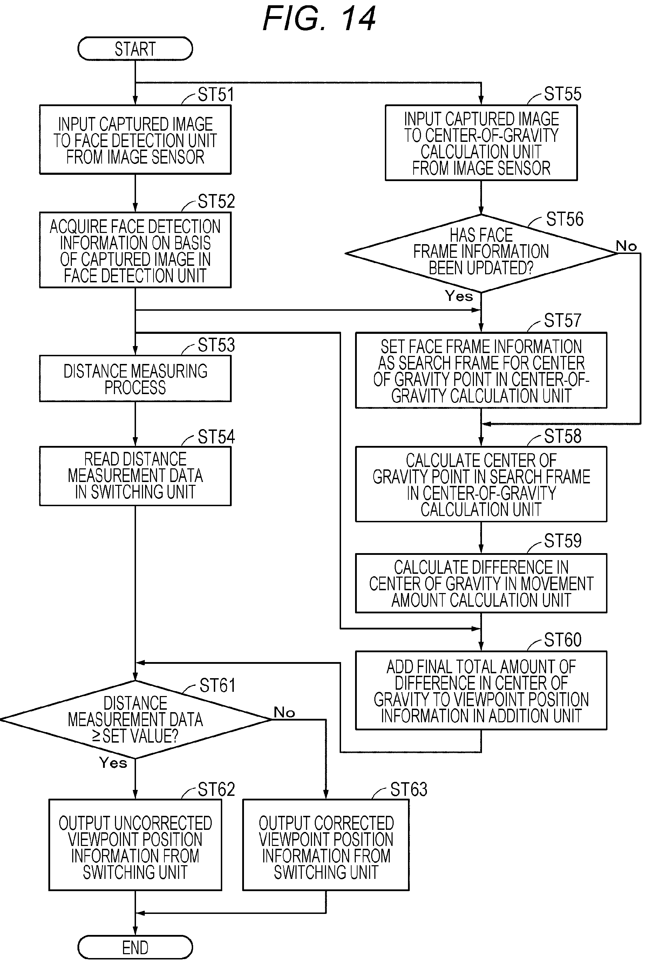

Next, the flow of a process performed by the viewpoint detection unit 10B according to the third embodiment will be described with reference to the flowchart in Fig. 14.

Once the process is started, a captured image obtained via the image sensor 11 is input to the face detection unit 12 (step ST51). Then, the face detection unit 12 acquires face detection information on the basis of the captured image, and outputs the acquired face detection information (step ST52).

The face detection information generated by the face detection unit 12 is supplied to the distance measuring unit 61. The distance measuring unit 61 performs the distance measuring process described above (step ST53). The distance measurement data obtained by the distance measuring process is supplied to the switching unit 62 and read by the switching unit 62 (step ST54) .

Furthermore, the captured image obtained via the image sensor 11 is input to the center-of-gravity calculation unit 13 (step ST55). Then, the center-of-gravity calculation unit 13 determines whether or not the face frame information has been updated (step ST56). The center-of-gravity calculation unit 13 determines whether or not the face frame information has been updated, depending on whether or not new face frame information has been input from the face detection unit 12, for example.

When the face frame information has been updated, the center-of-gravity calculation unit 13 sets the coordinates indicated by the updated face frame information as a search frame for the center of gravity point (step ST57). Then, the center-of-gravity calculation unit 13 calculates the center of gravity point in the set face frame. Note that, when the face frame information has not been updated, the center-of-gravity calculation unit 13 calculates the center of gravity point using the face frame information up to that point as a search frame for the center of gravity point (step ST58).

Then, the movement amount calculation unit 15 calculates and accumulates the difference in the center of gravity, which is the difference between the center of gravity points (step ST59). Then, the addition unit 16 adds the final difference in the center of gravity to the viewpoint position information supplied from the face detection unit 12 (step ST60). Note that the processes in steps ST55 to ST60 described above are similar processes to the processes described in the first embodiment.

The switching unit 62 determines whether or not the read distance measurement data is greater than a set value (for example, equal to or greater than the set value) (step ST61). Then, when the distance measurement data is equal to or greater than the set value, the switching unit 62 outputs the uncorrected viewpoint position information, in other words, the viewpoint position information supplied from the face detection unit 12 (step ST62). On the other hand, when the distance measurement data is smaller than the set value, the switching unit 62 outputs the corrected viewpoint position information, in other words, the viewpoint position information supplied from the movement amount calculation unit 15 (step ST63).

Note that, although not illustrated, in a parallax image processing unit 20 in the subsequent stage, a stereoscopic image corresponding to the viewpoint positions indicated by the viewpoint position information output from the switching unit 62 is generated.

According to the third embodiment described above, for example, the following effects can be obtained. When the distance from the user to the information processing apparatus is a proximal distance smaller than the threshold value, the viewpoint position information with excellent responsiveness output from the addition unit can be selected and output. Furthermore, when the distance from the user to the information processing apparatus is a far distance greater than the threshold value, the viewpoint position information with stability output from the face detection unit 12 can be selected and output.

The farther the distance from the user to the information processing apparatus, the smaller the change in the viewpoint positions on the screen, and the more difficult it is for the user to perceive the influence of latency on the stereoscopic image until the face detection information is detected. On the other hand, when the center-of-gravity calculation unit and the correction unit performs the processes, there is more possibility that chattering would be caused and noise or the like would be caused as a larger number of images are input, that is, the higher the frame rate. According to the third embodiment, when the user is located at a position proximal to the information processing apparatus, tracking data with excellent transient response can be output, and when the user is located at a far distance from the information processing apparatus, tracking data in which slight movements due to noise are suppressed can be output. This enables quick and stable tracking of the viewpoint positions.

<Modifications>

The plurality of embodiments according to the present disclosure has been specifically described thus far. However, the content of the present disclosure is not limited to the above-described embodiments and various modifications based on the technological spirit of the present disclosure can be made. Modifications will be described below.

In the above-described embodiments, the center of gravity point has been described as an example of the reference point, but the reference point is not limited to this example. An appropriate location other than the center of gravity point may be set as the reference point.

In the above-described embodiments, the movement amount of the center of gravity point between adjacent frames is calculated, but the movement amount is not limited to this case. For example, the movement amount of the center of gravity point between frames distant by a predetermined number of frames may be calculated. With this setting, when images are input at a high frame rate, the processing load can be reduced.

The above-described embodiments have a configuration in which the information processing apparatus includes the viewpoint detection unit and the parallax image processing unit, but a configuration in which another apparatus includes the parallax image processing unit may be employed.

The configurations described in the above-described embodiments are merely examples, and the present disclosure is not limited to these examples. Needless to say, the configuration may be, for example, added or deleted without departing from the gist of the present disclosure. The content of the description of each embodiment and modification can be combined as appropriate. The present disclosure can also be implemented in any mode such as an apparatus, a method, a program, and a system. The program can be stored in, for example, a memory included in the viewpoint detection unit or an appropriate recording medium and executed.

The present disclosure can also take the following configurations.

(1) An information processing apparatus including:

an acquisition unit that performs face detection on the basis of a captured image and acquires face detection information including face frame information and viewpoint position information on the basis of a face detection result;
a reference point calculation unit that calculates a reference point in a face frame indicated by the face frame information; and
a correction unit that corrects the viewpoint position information according to a movement amount of the reference point.

(2) The information processing apparatus according to (1), in which
the correction unit accumulates the movement amount of the reference point during a period required to acquire the face detection information, and corrects the viewpoint position information according to the accumulated movement amount of the reference point.
(3) The information processing apparatus according to (1) or (2), in which
the correction unit accumulates the movement amount of the reference point during a period required from acquisition of first face detection information to acquisition of second face detection information, which is face detection information subsequent to the first face detection information, and corrects the viewpoint position information included in the first face detection information according to the accumulated movement amount of the reference point.
(4) The information processing apparatus according to (2), in which
the correction unit accumulates the movement amount of the reference point between frames.
(5) The information processing apparatus according to any one of (1) to (4), in which
the reference point calculation unit calculates, as the reference point, a center of gravity point existing in an area of a predetermined color component in the face frame.
(6) The information processing apparatus according to (5), in which
the predetermined color component includes a skin color component.
(7) The information processing apparatus according to (1), in which
the correction unit sets weighting according to the movement amount of the reference point, and weights and adds the viewpoint position information included in the face detection information and position information on the reference point, using the set weighting.
(8) The information processing apparatus according to any one of (1) to (6), further including

a distance measuring unit that measures a distance to a user who is a target for face detection,
the information processing apparatus being configured to selectively output either the viewpoint position information generated by the acquisition unit or the viewpoint position information corrected by the correction unit, according to a distance measurement result of the distance measuring unit.

(9) The information processing apparatus according to (8), which is configured to:

output the viewpoint position information corrected by the correction unit when the distance measurement result is smaller than a threshold value; and
output the viewpoint position information generated by the acquisition unit when the distance measurement result is greater than the threshold value.

(10) The information processing apparatus according to any one of (1) to (9), further including
an imaging unit that acquires the captured image.
(11) The information processing apparatus according to (10), in which
the imaging unit includes the reference point calculation unit.
(12) The information processing apparatus according to (10) or (11), in which
the imaging unit is capable of imaging at 1000 frames per second (fps) or higher.
(13) The information processing apparatus according to any one of (1) to (12), further including

a stereoscopic image acquisition unit that generates a stereoscopic image using viewpoint positions corrected by the correction unit.

(14) The information processing apparatus according to (13), further including

a display on which the stereoscopic image is displayed.

(15) An information processing method including:

performing, by an acquisition unit, face detection on the basis of a captured image and acquiring face detection information including face frame information and viewpoint position information on the basis of a face detection result;

calculating, by a reference point calculation unit, a reference point in a face frame indicated by the face frame information; and

correcting, by a correction unit, the viewpoint position information according to a movement amount of the reference point.

(16) A program that causes a computer to execute an information processing method including:

performing, by an acquisition unit, face detection on the basis of a captured image and acquiring face detection information including face frame information and viewpoint position information on the basis of a face detection result;

calculating, by a reference point calculation unit, a reference point in a face frame indicated by the face frame information; and

correcting, by a correction unit, the viewpoint position information according to a movement amount of the reference point.

<Application Example>

The technology according to the present disclosure can be applied to a variety of products. For example, the technology according to the present disclosure may be applied to a surgery room system.

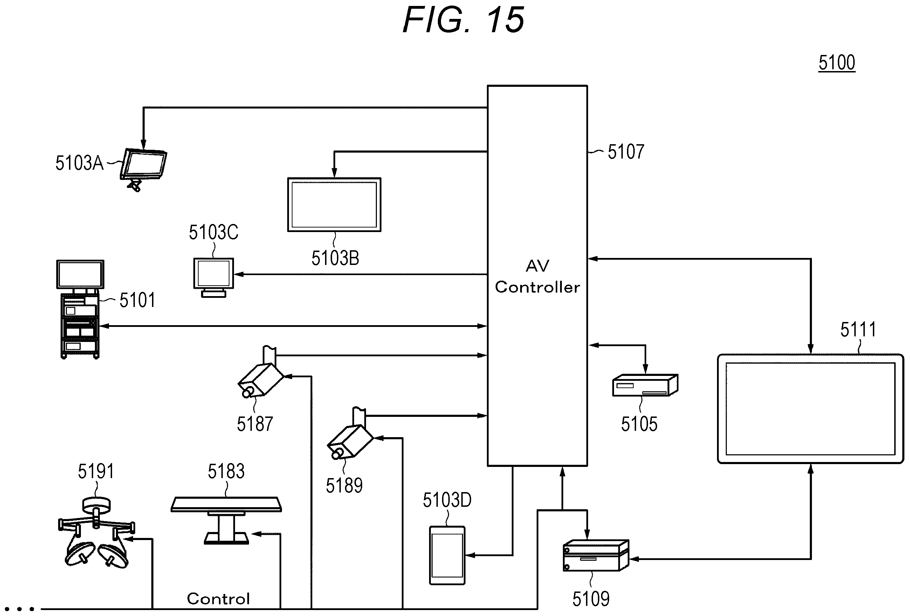

Fig. 15 is a diagram illustrating an outlined overall configuration of the surgery room system 5100 to which the technology according to the present disclosure can be applied. Referring to Fig. 15, the surgery room system 5100 is configured such that a group of apparatuses installed in a surgery room are connected to each other so as to be able to cooperate via an audio-visual controller (AV controller) 5107 and a surgery room control apparatus 5109.

A variety of apparatuses can be installed in the surgery room. Fig. 15 illustrates, as an example, an apparatus group 5101 of various types for a surgery through an endoscope, a ceiling camera 5187 provided on the ceiling of the surgery room to image the area around the hands of an operating surgeon, a surgical field camera 5189 provided on the ceiling of the surgery room to image events in the entire surgery room, a plurality of display apparatuses 5103A to 5103D, a recorder 5105, a patient bed 5183, and an illumination 5191.

Here, among these apparatuses, the apparatus group 5101 belongs to an endoscopic surgery system 5113 to be described later and includes an endoscope and a display apparatus or the like that displays an image captured by the endoscope. Each apparatus belonging to the endoscopic surgery system 5113 is also called as a medical instrument. Meanwhile, the display apparatuses 5103A to 5103D, the recorder 5105, the patient bed 5183, and the illumination 5191 are apparatuses situated, for example, in the surgery room apart from the endoscopic surgery system 5113. Each of these apparatuses not belonging to the endoscopic surgery system 5113 is also called as a non-medical instrument. The audio-visual controller 5107 and/or the surgery room control apparatus 5109 control working of these medical instruments and non-medical instruments cooperatively with each other.

The audio-visual controller 5107 comprehensively controls processes relating to image display in the medical instruments and non-medical instruments. Specifically, among the apparatuses included in the surgery room system 5100, the apparatus group 5101, the ceiling camera 5187, and the surgical field camera 5189 can be apparatuses (hereinafter also called as distribution source apparatuses) having a function of distributing information (hereinafter also referred to as display information) to be displayed during surgery. Furthermore, the display apparatuses 5103A to 5103D can be apparatuses (hereinafter also called as output destination apparatuses) to which the display information is output. In addition, the recorder 5105 can be an apparatus fulfilling both of the distribution source apparatus and the output destination apparatus. The audio-visual controller 5107 controls working of the distribution source apparatuses and the output destination apparatuses and has a function of acquiring the display information from the distribution source apparatuses and transmitting the acquired display information to the output destination apparatuses to display or record the transmitted display information on the output destination apparatuses. Note that the display information includes various images captured during surgery, various types of information regarding surgery (for example, body information on a patient, information about past examination results, and surgical procedures), and the like.

Specifically, information about the image of the surgical site in the body cavity of the patient captured by an endoscope can be transmitted to the audio-visual controller 5107 from the apparatus group 5101 as the display information. Furthermore, information about the image of the area around the hands of the operating surgeon captured by the ceiling camera 5187 can be transmitted from this ceiling camera 5187 as the display information. In addition, information about the image indicating events in the entire surgery room captured by the surgical field camera 5189 can be transmitted from this surgical field camera 5189 as the display information. Note that, when the surgery room system 5100 contains another apparatus having the imaging function, the audio-visual controller 5107 may acquire information about the image captured by the another apparatus also from the another apparatus as the display information.

Alternatively, for example, information about these images captured in the past is recorded in the recorder 5105 by the audio-visual controller 5107. The audio-visual controller 5107 can acquire information about these images captured in the past from the recorder 5105 as the display information. Note that also various types of information regarding surgery may be recorded in the recorder 5105 beforehand.

The audio-visual controller 5107 displays the acquired display information (in other words, images captured during surgery or various types of information regarding surgery) on at least one of the display apparatuses 5103A to 5103D, which are the output destination apparatuses. In the illustrated example, the display apparatus 5103A is a display apparatus installed by being suspended from the ceiling of the surgery room, the display apparatus 5103B is a display apparatus installed on the wall surface of the surgery room, the display apparatus 5103C is a display apparatus installed on a desk in the surgery room, and the display apparatus 5103D is a mobile instrument having a display function (for example, a tablet personal computer (PC)).

Furthermore, although illustration is omitted in Fig. 15, the surgery room system 5100 may include an apparatus outside the surgery room. Apparatuses outside the surgery room can be, for example, servers connected to a network constructed inside and outside the hospital, PCs used by medical staff, projectors installed in conference rooms of the hospital, and the like. When such external apparatuses are located outside the hospital, the audio-visual controller 5107 can also display the display information on a display apparatus in another hospital via a television conference system or the like for remote medical treatment.

The surgery room control apparatus 5109 comprehensively controls processes other than processes relating to image display in the non-medical instruments. For example, the surgery room control apparatus 5109 controls driving of the patient bed 5183, the ceiling camera 5187, the surgical field camera 5189, and the illumination 5191.

A centralized operation panel 5111 is provided in the surgery room system 5100, and a user can give an instruction about image display to the audio-visual controller 5107 or can give an instruction about working of the non-medical instruments to the surgery room control apparatus 5109 via this centralized operation panel 5111. The centralized operation panel 5111 is configured in such a manner that a touch panel is provided on a display surface of the display apparatus.

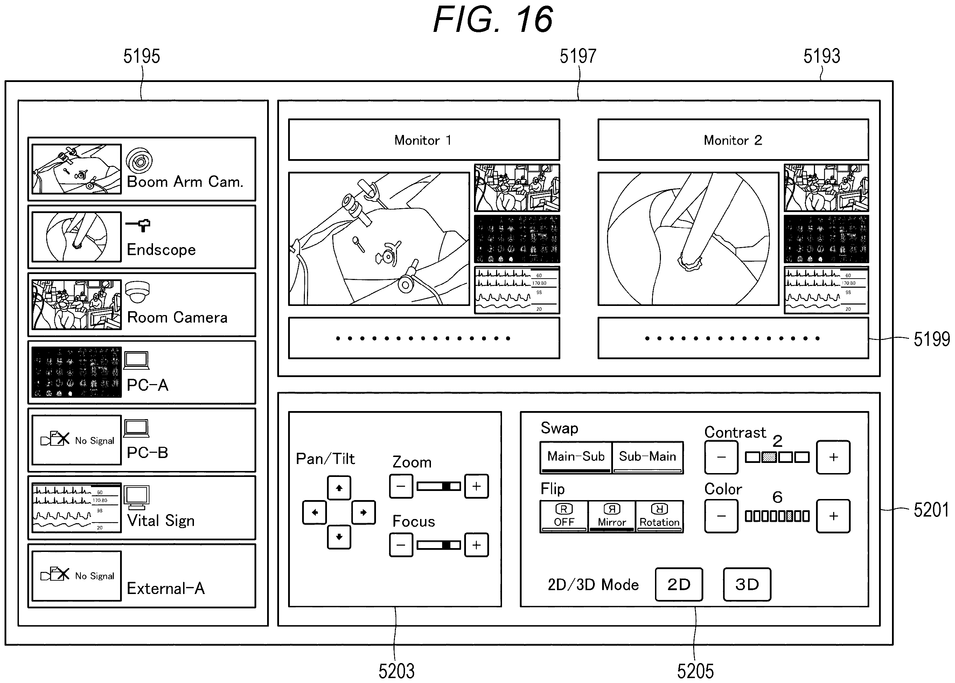

Fig. 16 is a diagram illustrating a display example of an operation screen on the centralized operation panel 5111. As an example, Fig. 16 illustrates an operation screen corresponding to a case where two display apparatuses are provided as the output destination apparatuses in the surgery room system 5100. Referring to Fig. 16, the operation screen 5193 is provided with a distribution source selection area 5195, a preview area 5197, and a control area 5201.

In the distribution source selection area 5195, distribution source apparatuses included in the surgery room system 5100 and thumbnail screens representing the display information kept by these distribution source apparatuses are linked and displayed. The user can select display information to be displayed on the display apparatus from any one of the distribution source apparatuses displayed in the distribution source selection area 5195.

In the preview area 5197, previews of screens displayed on the two display apparatuses (Monitor 1 and Monitor 2), which are the output destination apparatuses, are displayed. In the illustrated example, four images are displayed as a picture-in-picture (P-in-P) display on one display apparatus. These four images correspond to the display information distributed from the distribution source apparatus selected in the distribution source selection area 5195. Among the four images, one is displayed relatively large as a main image and the remaining three images are displayed relatively small as sub-images. The user can interchange the main image with the sub images by appropriately selecting areas in which the four images are displayed. Furthermore, a status display area 5199 is provided under the areas in which the four images are displayed, and the status relating to the surgery (for example, the elapsed time of the surgery and the body information on the patient) can be appropriately displayed in this area.

The control area 5201 is provided with a distribution source operation area 5203 in which a graphical user interface (GUI) component for performing operations on the distribution source apparatus is displayed, and an output destination operation area 5205 in which a GUI component for performing operations on the output destination apparatus is displayed. In the illustrated example, GUI components for performing various operations (panning, tilting, and zooming) on a camera of the distribution source apparatus having the imaging function are provided in the distribution source operation area 5203. By appropriately selecting these GUI components, the user can operate working of the camera of the distribution source apparatus. Note that, although illustration is omitted, when the distribution source apparatus being selected in the distribution source selection area 5195 is a recorder (in other words, when an image recorded in the recorder in the past is displayed in the preview area 5197), GUI components for performing operations such as reproduction, reproduction stop, rewind, and fast forward of this past recorded image can be provided in the distribution source operation area 5203.

Furthermore, the output destination operation area 5205 is provided with GUI components for performing various operations (swap, flip, color adjustment, contrast adjustment, switching between two-dimensional (2D) display and three-dimensional (3D) display) with respect to display on the display apparatus, which is the output destination apparatus. By appropriately selecting these GUI components, the user can operate display on the display apparatus.

Note that the operation screen displayed on the centralized operation panel 5111 is not limited to the example illustrated in Fig. 16 and the user can be allowed to input, via the centralized operation panel 5111, operations to each apparatus that is included in the surgery room system 5100 and can be controlled by the audio-visual controller 5107 and the surgery room control apparatus 5109.

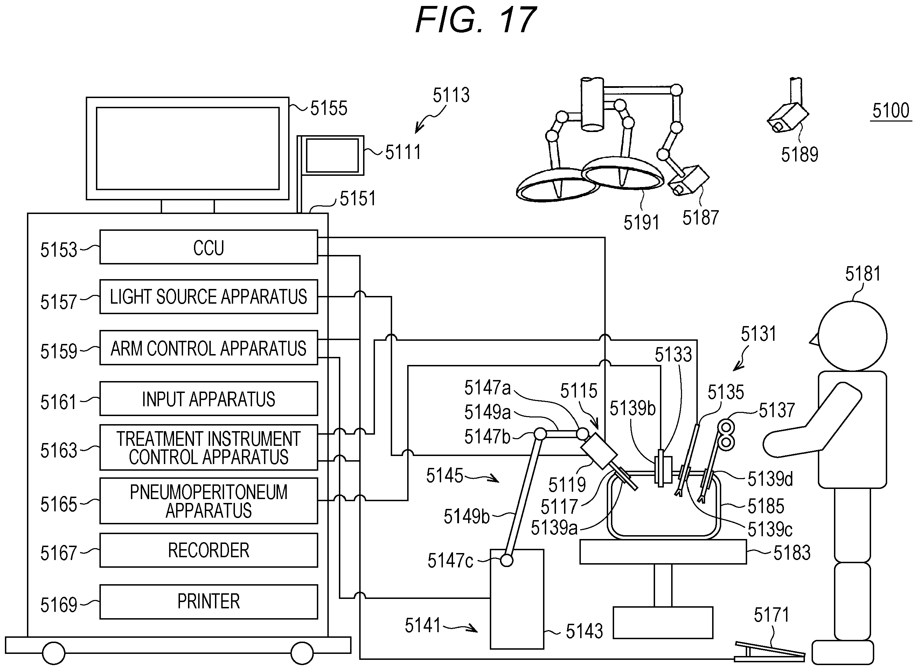

Fig. 17 is a diagram illustrating an example of how a surgery is conducted while the surgery room system described above is applied. The ceiling camera 5187 and the surgical field camera 5189 are provided on the ceiling of the surgery room and can capture the area around the hands of an operating surgeon (surgeon) 5181 performing the treatment on an affected part of a patient 5185 on the patient bed 5183, and events in the entire surgery room. The ceiling camera 5187 and the surgical field camera 5189 can be provided with a magnification adjustment function, a focal length adjustment function, a capturing direction adjustment function, and the like. The illumination 5191 is provided on the ceiling of the surgery room and irradiates at least the area around the hands of the operating surgeon 5181. The illumination 5191 can be capable of appropriately adjusting its irradiation light amount, wavelength (color) of the irradiation light, light irradiation direction, and the like.

As illustrated in Fig. 15, the endoscopic surgery system 5113, the patient bed 5183, the ceiling camera 5187, the surgical field camera 5189, and the illumination 5191 are connected to each other so as to be able to cooperate via the audio-visual controller 5107 and the surgery room control apparatus 5109 (not illustrated in Fig. 17). The centralized operation panel 5111 is provided in the surgery room and, as described above, the user can appropriately operate these apparatuses located in the surgery room via this centralized operation panel 5111.

Hereinafter, the configuration of the endoscopic surgery system 5113 will be described in detail. As illustrated in Fig. 15, the endoscopic surgery system 5113 is constituted by an endoscope 5115, other surgical tools 5131, a support arm apparatus 5141 supporting the endoscope 5115, and a cart 5151 in which various apparatuses for surgery through the endoscope are placed.

In endoscopic surgery, instead of cutting the abdominal wall and opening the abdomen, a plurality of cylindrical puncture tools called trocars 5139a to 5139d is punctured into the abdominal wall. Then, a lens barrel 5117 of the endoscope 5115 and other surgical tools 5131 are inserted into the body cavity of the patient 5185 through the trocars 5139a to 5139d. In the illustrated example, a pneumoperitoneum tube 5133, an energy treatment instrument 5135, and a forceps 5137 are inserted into the body cavity of the patient 5185 as the other surgical tools 5131. Furthermore, the energy treatment instrument 5135 is a treatment instrument that performs incision and detachment of tissue, sealing of a blood vessel, and the like by high-frequency current or ultrasonic vibration. However, the illustrated surgical tools 5131 are merely an example and various surgical tools generally used for surgery through the endoscope, such as a thumb forceps and a retractor, can be used as the surgical tools 5131.

The image of the surgical site in the body cavity of the patient 5185 captured by the endoscope 5115 is displayed on a display apparatus 5155. The operating surgeon 5181 performs treatment such as cutting off the affected part using the energy treatment instrument 5135 and the forceps 5137 while viewing the image of the surgical site displayed on the display apparatus 5155 in real time. Note that, although illustration is omitted, the pneumoperitoneum tube 5133, the energy treatment instrument 5135, and the forceps 5137 are supported by the operating surgeon 5181 or an assistant or the like during surgery.

(Support Arm Apparatus)

The support arm apparatus 5141 includes an arm portion 5145 extending from a base portion 5143. In the illustrated example, the arm portion 5145 is constituted by joint portions 5147a, 5147b, and 5147c, and links 5149a and 5149b and is driven under the control of an arm control apparatus 5159. The endoscope 5115 is supported by the arm portion 5145 such that the position and posture of the endoscope 5115 are controlled. With this configuration, fixing of the position of the endoscope 5115 can be implemented in a stable manner.

(Endoscope)

The endoscope 5115 is constituted by the lens barrel 5117 of which an area of a predetermined length from the distal end is inserted into the body cavity of the patient 5185, and a camera head 5119 connected to the proximal end of the lens barrel 5117. In the illustrated example, the endoscope 5115 configured as a so-called rigid endoscope having the rigid lens barrel 5117 is illustrated; however, the endoscope 5115 may be configured as a so-called flexible endoscope having the flexible lens barrel 5117.

An opening portion into which an objective lens is fitted is provided at the distal end of the lens barrel 5117. A light source apparatus 5157 is connected to the endoscope 5115; light generated by this light source apparatus 5157 is guided to the distal end of the lens barrel 5117 by a light guide provided extending inside this lens barrel, and is radiated toward an object to be observed in the body cavity of the patient 5185 via the objective lens. Note that the endoscope 5115 may be a forward-viewing endoscope, an oblique-viewing endoscope, or a side-viewing endoscope.

An optical system and an imaging element are provided inside the camera head 5119 and reflected light (observation light) from the object to be observed is converged on this imaging element by this optical system. The observation light is photoelectrically converted by the imaging element and an electrical signal corresponding to the observation light, in other words, an image signal corresponding to the observation image is generated. This image signal is transmitted as RAW data to a camera control unit (CCU) 5153. Note that the camera head 5119 is equipped with a function of adjusting the magnification and focal length by appropriately driving the optical system thereof.

In addition, for example, in order to cope with stereoscopic viewing (3D display) or the like, a plurality of imaging elements may be provided in the camera head 5119. In this case, a plurality of relay optical systems is provided inside the lens barrel 5117 in order to guide the observation light to each of the plurality of imaging elements.

(Various Apparatuses Equipped in Cart)

The CCU 5153 is constituted by a central processing unit (CPU), graphics processing unit (GPU), or the like and comprehensively controls working of the endoscope 5115 and the display apparatus 5155. Specifically, the CCU 5153 carries out various image processes for displaying an image based on the image signal accepted from the camera head 5119, such as a developing process (demosaic process), on this image. The CCU 5153 provides the image signal on which these image processes have been carried out to the display apparatus 5155. Furthermore, the audio-visual controller 5107 illustrated in Fig. 15 is connected to the CCU 5153. The CCU 5153 also provides the image signal on which the image processes have been carried out to the audio-visual controller 5107. In addition, the CCU 5153 transmits a control signal to the camera head 5119 and controls driving of the camera head 5119. This control signal can include information regarding imaging conditions such as magnification and focal length. This information regarding the imaging conditions may be input via an input apparatus 5161 or may be input via the above-described centralized operation panel 5111.

The display apparatus 5155 displays an image based on the image signal on which the image processes have been carried out by the CCU 5153, under the control of the CCU 5153. When the endoscope 5115 is compatible with high resolution capturing such as 4K capturing (the number of horizontal pixels 3840 × the number of vertical pixels 2160), or 8K capturing (the number of horizontal pixels 7680 × the number of vertical pixels 4320), and/or is compatible with 3D display, for example, a display apparatus capable of high resolution display and/or capable of 3D display can be used as the display apparatus 5155 so as to cope with each case. When the endoscope 5115 is compatible with high resolution capturing such as 4K or 8K capturing, a more immersive feeling can be obtained by using a display apparatus 5155 having a size of 55 inches or more. Furthermore, a plurality of display apparatuses 5155 with different resolutions and sizes may be provided depending on the practical usage.

The light source apparatus 5157 is constituted, for example, by a light source such as a light emitting diode (LED) and supplies irradiation light used when the surgical site is captured to the endoscope 5115.

The arm control apparatus 5159 is constituted, for example, by a processor such as a CPU and works in accordance with a predetermined program to control driving of the arm portion 5145 of the support arm apparatus 5141 in accordance with a predetermined control scheme.

The input apparatus 5161 is an input interface to the endoscopic surgery system 5113. The user can input various types of information and input instructions to the endoscopic surgery system 5113 via the input apparatus 5161. For example, the user inputs various types of information regarding surgery, such as body information on the patient and information about the surgical procedure of the surgery, via the input apparatus 5161. Furthermore, for example, the user inputs an instruction to drive the arm portion 5145, an instruction to change the imaging conditions (the type of irradiation light, the magnification, the focal length, and the like) for the endoscope 5115, an instruction to drive the energy treatment instrument 5135, and the like via the input apparatus 5161.

The type of the input apparatus 5161 is not limited and the input apparatus 5161 can be various known input apparatuses. For example, a mouse, a keyboard, a touch panel, a switch, a foot switch 5171, and/or a lever can be applied as the input apparatus 5161. When a touch panel is used as the input apparatus 5161, the touch panel may be provided on the display surface of the display apparatus 5155.

Alternatively, the input apparatus 5161 is a device worn by the user, such as a glasses-type wearable device or a head-mounted display (HMD), and various inputs are made according to the gesture and the line of sight of the user detected by these devices. Furthermore, the input apparatus 5161 includes a camera capable of detecting the motion of the user and various inputs are made according to the gesture and the line of sight of the user detected from a video captured by the camera. Moreover, the input apparatus 5161 includes a microphone capable of picking up the voice of the user and various inputs are made by sound via the microphone. In this manner, by configuring the input apparatus 5161 so as to be able to input various types of information in a non-contact manner, particularly a user (for example, the operating surgeon 5181) belonging to a clean area is allowed to operate an instrument belonging to a non-clean area in a non-contact manner. In addition, since the user can operate the instrument without releasing his/her hand from the holding surgical tool, the user's convenience is improved.

A treatment instrument control apparatus 5163 controls driving of the energy treatment instrument 5135 for cauterization and incision of tissue, or sealing of a blood vessel, or the like. For the purpose of securing a visual field of the endoscope 5115 and securing a working space for the operating surgeon, a pneumoperitoneum apparatus 5165 delivers a gas into the body cavity of the patient 5185 via the pneumoperitoneum tube 5133 in order to inflate the body cavity. A recorder 5167 is an apparatus capable of recording various types of information regarding surgery. A printer 5169 is an apparatus capable of printing various types of information regarding surgery in various formats such as text, image, or graph.

Hereinafter, a particularly characteristic configuration of the endoscopic surgery system 5113 will be described in more detail.

(Support Arm Apparatus)

The support arm apparatus 5141 includes the base portion 5143 as a pedestal and the arm portion 5145 extending from the base portion 5143. In the illustrated example, the arm portion 5145 is constituted by the plurality of joint portions 5147a, 5147b, and 5147c, and the plurality of links 5149a and 5149b coupled by the joint portion 5147b; in Fig. 17, however, for the sake of simplicity, the configuration of the arm portion 5145 is illustrated in a simplified manner. Actually, the shapes, the number, and the arrangement of the joint portions 5147a to 5147c and the links 5149a and 5149b, as well as the directions of the rotation axes of the joint portions 5147a to 5147c, and the like can be appropriately set such that the arm portion 5145 has a desired degree of freedom. For example, the arm portion 5145 can be suitably configured so as to have degrees of freedom equal to or greater than six degrees of freedom. This allows the endoscope 5115 to freely move within the movable range of the arm portion 5145, such that the lens barrel 5117 of the endoscope 5115 can be inserted into the body cavity of the patient 5185 in a desired direction.

Actuators are provided in the joint portions 5147a to 5147c and the joint portions 5147a to 5147c are configured so as to be rotatable around predetermined rotation axes by driving of these actuators. Driving of the actuators is controlled by the arm control apparatus 5159, such that the rotation angle of each of the joint portions 5147a to 5147c is controlled and then driving of the arm portion 5145 is controlled. With this configuration, the control of the position and posture of the endoscope 5115 can be implemented. At this time, the arm control apparatus 5159 can control driving of the arm portion 5145 by various known control schemes such as force control or position control.

For example, the position and posture of the endoscope 5115 can be controlled in such a manner that the operating surgeon 5181 appropriately makes an operation input via the input apparatus 5161 (including the foot switch 5171) and in turn the arm control apparatus 5159 appropriately controls driving of the arm portion 5145 according to the operation input. With this control, the endoscope 5115 at the distal end of the arm portion 5145 can be moved from an arbitrary position to another arbitrary position and thereafter can be fixedly supported at that position after the movement. Note that the arm portion 5145 may be operated by a so-called master slave scheme. In this case, the arm portion 5145 can be remotely operated by the user via the input apparatus 5161 installed at a place away from the surgery room.

Furthermore, when the force control is applied, the arm control apparatus 5159 may perform so-called power assist control in which the actuators of the respective joint portions 5147a to 5147c are driven in response to an external force from the user such that the arm portion 5145 moves smoothly in proportion to the external force. With this control, when the user moves the arm portion 5145 while directly touching the arm portion 5145, the arm portion 5145 can be moved with a relatively light force. Accordingly, it becomes possible to more intuitively move the endoscope 5115 with a simpler operation and user's convenience can be improved.

Here, in general surgery through the endoscope, the endoscope 5115 has been supported by a surgeon called a scopist. In contrast to this, using the support arm apparatus 5141 makes it possible to reliably fix the position of the endoscope 5115 without manual operation, such that the image of the surgical site can be stably obtained and surgery can be performed smoothly.

Note that the arm control apparatus 5159 is not necessarily provided in the cart 5151. Furthermore, the arm control apparatus 5159 is not necessarily one apparatus. For example, the arm control apparatus 5159 may be provided in each of the joint portions 5147a to 5147c of the arm portion 5145 of the support arm apparatus 5141 such that control of driving of the arm portion 5145 is implemented by the plurality of arm control apparatuses 5159 collaborating with each other.

(Light Source Apparatus)

The light source apparatus 5157 supplies the endoscope 5115 with irradiation light when the surgical site is captured. The light source apparatus 5157 is constituted, for example, by an LED, a laser light source, or a white light source constituted by a combination thereof. At this time, when the white light source is configured by a combination of RGB laser light sources, the output intensity and the output timing of each color (each wavelength) can be controlled with high precision and accordingly the white balance of the captured image can be adjusted in the light source apparatus 5157. Furthermore, in this case, by irradiating an object to be observed with a laser beam from each of the RGB laser light sources by time sharing and controlling driving of the imaging element of the camera head 5119 in synchronization with the irradiation timing, it is also possible to capture an image correspond to each of RGB by time sharing. According to this method, a color image can be obtained without providing a color filter in the imaging element.

In addition, driving of the light source apparatus 5157 may be controlled such that the intensity of light to be output is changed for every predetermined time span. By controlling driving of the imaging element of the camera head 5119 in synchronism with the timing of the change of the intensity of light to acquire images by time sharing and merging these images, an image of a high dynamic range without so-called blocked up shadows and blown out highlights can be generated.

Furthermore, the light source apparatus 5157 may be configured such that light of a predetermined wavelength band compatible with special light observation can be supplied from the light source apparatus 5157. In the special light observation, for example, by utilizing the wavelength dependence of light absorption in body tissue, so-called narrow band light observation (narrow band imaging) is performed in which, by radiating narrow band light compared with the irradiation light at the time of ordinary observation (in other words, white light), predetermined tissue such as a blood vessel at a mucosal surface layer is captured with high contrast. Alternatively, in the special light observation, fluorescence observation for obtaining an image by fluorescence generated by radiating excitation light may be performed. In the fluorescence observation, for example, fluorescence observation in which body tissue is irradiated with excitation light and fluorescence from the body tissue is observed (autofluorescence observation), or fluorescence observation in which a reagent such as indocyanine green (ICG) is locally administered to body tissue and at the same time, the body tissue is irradiated with excitation light corresponding to a fluorescence wavelength of the reagent to obtain a fluorescent image can be performed. The light source apparatus 5157 can be configured such that narrow band light and/or excitation light compatible with such special light observation can be supplied from the light source apparatus 5157.

(Camera Head and CCU)

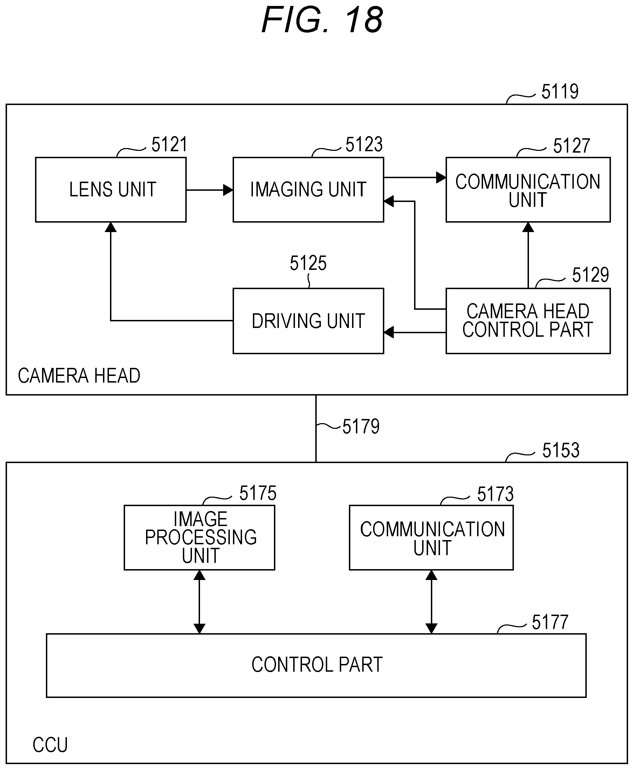

Referring to Fig. 18, functions of the camera head 5119 and the CCU 5153 of the endoscope 5115 will be described in more detail. Fig. 18 is a block diagram illustrating an example of functional configurations of the camera head 5119 and the CCU 5153 illustrated in Fig. 17.

Referring to Fig. 18, the camera head 5119 has a lens unit 5121, an imaging unit 5123, a driving unit 5125, a communication unit 5127, and a camera head control part 5129 as functions thereof. Furthermore, the CCU 5153 has a communication unit 5173, an image processing unit 5175, and a control part 5177 as functions thereof. The camera head 5119 and the CCU 5153 are connected via a transmission cable 5179 so as to be able to communicate bidirectionally.

First, the functional configuration of the camera head 5119 will be described. The lens unit 5121 is an optical system provided at a connecting portion with the lens barrel 5117. The observation light taken in from the distal end of the lens barrel 5117 is guided to the camera head 5119 and is incident on the lens unit 5121. The lens unit 5121 is constituted by combining a plurality of lenses including a zoom lens and a focus lens. The optical characteristics of the lens unit 5121 are adjusted so as to converge the observation light on a light receiving surface of the imaging element of the imaging unit 5123. Furthermore, the zoom lens and the focus lens are configured such that their positions on an optical axis can move in order to adjust the magnification and focus of the captured image.

The imaging unit 5123 is constituted by the imaging element and is arranged at a subsequent stage of the lens unit 5121. The observation light having passed through the lens unit 5121 is converged on the light receiving surface of the imaging element and an image signal corresponding to the observation image is generated by photoelectric conversion. The image signal generated by the imaging unit 5123 is provided to the communication unit 5127.

For example, an image sensor of the complementary metal oxide semiconductor (CMOS) type capable of capturing a color image having a Bayer array is used as the imaging element constituting the imaging unit 5123. Note that, for example, an imaging element capable of coping with capturing of a high resolution image of 4K or more may be used as the imaging element. Since the image of the surgical site is obtained with high resolution, the operating surgeon 5181 can grasp how the surgical site is in more detail and can progress the surgery more smoothly.

Furthermore, the imaging element constituting the imaging unit 5123 is configured such that the imaging element constituting the imaging unit 5123 has a pair of imaging elements for separately acquiring image signals for right eye and left eye compatible with the 3D display. Owing to that the 3D display is performed, the operating surgeon 5181 can more accurately grasp the depth of the living tissue in the surgical site. Note that, when the imaging unit 5123 is configured as a multi-plate type, the lens units 5121 are also provided as a plurality of systems corresponding to respective imaging elements.

Furthermore, the imaging unit 5123 is not necessarily provided in the camera head 5119. For example, the imaging unit 5123 may be provided inside the lens barrel 5117 immediately behind the objective lens.

The driving unit 5125 is constituted by an actuator and moves the zoom lens and the focus lens of the lens unit 5121 by a predetermined distance along the optical axis under the control of the camera head control part 5129. With this movement, the magnification and the focus of the captured image by the imaging unit 5123 can be appropriately adjusted.

The communication unit 5127 is constituted by a communication apparatus for transmitting and receiving various types of information to and from the CCU 5153. The communication unit 5127 transmits the image signal obtained from the imaging unit 5123 as RAW data to the CCU 5153 via the transmission cable 5179. At this time, in order to display the captured image of the surgical site with low latency, it is preferred that the image signal be transmitted by optical communication. This is because the operating surgeon 5181 performs surgery while observing the state of the affected part with the captured image and thus, for more safe and reliable surgery, the moving image of the surgical site is required to be displayed in real time as much as possible during surgery. When optical communication is performed, a photoelectric conversion module that converts the electrical signal into an optical signal is provided in the communication unit 5127. The image signal is converted into an optical signal by the photoelectric conversion module and then transmitted to the CCU 5153 via the transmission cable 5179.

Furthermore, the communication unit 5127 receives the control signal for controlling driving of the camera head 5119 from the CCU 5153. This control signal may include information regarding imaging conditions, such as information to specify a frame rate of the captured image, information to specify an exposure value at the time of imaging, and/or information to specify the magnification and focus of the captured image, for example. The communication unit 5127 provides the received control signal to the camera head control part 5129. Note that the control signal from the CCU 5153 may also be transmitted by optical communication. In this case, the communication unit 5127 is provided with a photoelectric conversion module that converts the optical signal into an electrical signal; the control signal is converted into an electrical signal by this photoelectric conversion module and then provided to the camera head control part 5129.

Note that the above-mentioned imaging conditions such as the frame rate, exposure value, magnification, and focus are automatically set by the control part 5177 of the CCU 5153 on the basis of the acquired image signal. That is, so-called auto exposure (AE) function, auto focus (AF) function, and auto white balance (AWB) function are equipped in the endoscope 5115.

The camera head control part 5129 controls driving of the camera head 5119 on the basis of the control signal received from the CCU 5153 via the communication unit 5127. For example, the camera head control part 5129 controls driving of the imaging element of the imaging unit 5123 on the basis of information to specify the frame rate of the captured image and/or information to specify exposure at the time of imaging. Furthermore, for example, the camera head control part 5129 appropriately moves the zoom lens and the focus lens of the lens unit 5121 via the driving unit 5125 on the basis of information to specify the magnification and focus of the captured image. The camera head control part 5129 may further include a function of storing information for identifying the lens barrel 5117 and the camera head 5119.

Note that, by arranging constituents such as the lens unit 5121 and the imaging unit 5123 in a hermetically sealed structure having high airtightness and waterproofness, the camera head 5119 is enabled to have resistance to an autoclave sterilization process.

Next, the functional configuration of the CCU 5153 will be described. The communication unit 5173 is constituted by a communication apparatus for transmitting and receiving various types of information to and from the camera head 5119. The communication unit 5173 receives the image signal transmitted from the camera head 5119 via the transmission cable 5179. At this time, as described above, the image signal can be suitably transmitted by optical communication. In this case, a photoelectric conversion module that converts the optical signal into an electrical signal is provided in the communication unit 5173 so as to be compatible with the optical communication. The communication unit 5173 provides the image signal converted into the electrical signal to the image processing unit 5175.

Furthermore, the communication unit 5173 transmits the control signal for controlling driving of the camera head 5119 to the camera head 5119. This control signal can also be transmitted by optical communication.

The image processing unit 5175 carries out various image processes on the image signal, which is RAW data transmitted from the camera head 5119. Examples of these image processes include various known signal processes such as a developing process, a high image quality process (a band enhancement process, a super resolution process, a noise reduction (NR) process, a camera shake correction process, and/or the like), and/or an enlargement process (electronic zoom process). Furthermore, the image processing unit 5175 performs a wave sensing process on the image signal for performing AE, AF, and AWB.

The image processing unit 5175 is constituted by a processor such as a CPU and a GPU and the above-described image processes and wave sensing process can be performed by this processor working in accordance with a predetermined program. Note that, when the image processing unit 5175 is constituted by a plurality of GPUs, the image processing unit 5175 appropriately divides the information associated with the image signal and performs the image processes in parallel by the plurality of GPUs.

The control part 5177 performs various types of control relating to imaging of the surgical site by the endoscope 5115 and display of the captured image obtained by the imaging. For example, the control part 5177 generates a control signal for controlling driving of the camera head 5119. At this time, when the imaging conditions have been input by the user, the control part 5177 generates the control signal on the basis of the input by the user. Alternatively, when the AE function, the AF function, and the AWB function are equipped in the endoscope 5115, the control part 5177 appropriately calculates the optimum exposure value, focal length, and white balance according to the result of the wave sensing process by the image processing unit 5175 and generates the control signal.

Furthermore, the control part 5177 displays the image of the surgical site on the display apparatus 5155 on the basis of the image signal on which the image processes have been carried out by the image processing unit 5175. At this time, the control part 5177 recognizes various objects in the image of the surgical site using various image recognition technologies. For example, the control part 5177 detects the shape, color, and the like of the edge of an object included in the image of the surgical site, thereby being able to recognize a surgical tool such as the forceps, a particular living body part, bleeding, a mist at the time of using the energy treatment instrument 5135, and the like. When displaying the image of the surgical site on the display apparatus 5155, the control part 5177 displays various types of surgery support information superimposed onto this image of the surgical site using results of the recognition. Since the surgery support information is displayed superimposed and presented to the operating surgeon 5181, surgery can be advanced more safely and reliably.

The transmission cable 5179 connecting the camera head 5119 and the CCU 5153 is an electrical signal cable compatible with communication of electrical signals, an optical fiber compatible with optical communication, or a composite cable thereof.

Here, in the illustrated example, communication is performed by wire using the transmission cable 5179; however, communication between the camera head 5119 and the CCU 5153 may be performed wirelessly. When the communication between the camera head 5119 and the CCU 5153 is performed wirelessly, it is no longer necessary to lay the transmission cable 5179 in the surgery room, such that the situation in which the movement of the medical staff in the surgery room is hindered by the transmission cable 5179 can be solved.

An example of the surgery room system 5100 to which the technology according to the present disclosure can be applied has been described thus far. Note that, as an example, a case where a medical system to which the surgery room system 5100 is applied is the endoscopic surgery system 5113 has been described here; however, the configuration of the surgery room system 5100 is not limited to this example. For example, the surgery room system 5100 may be applied to a flexible endoscope system for examination or a microscope surgery system instead of the endoscopic surgery system 5113.

The technology according to the present disclosure can be suitably applied to a configuration that generates a video, for example, the audio-visual controller 5107, in the configuration described above. By applying the technology according to the present disclosure to the audio-visual controller 5107, an appropriate stereoscopic image according to the viewpoint positions of a surgeon can be generated in a medical surgery performed by the surgeon while viewing the display apparatus 5103B.

REFERENCE SIGNS LIST

1 Information processing apparatus
11 Image sensor
12 Face detection unit
13 Center-of-gravity calculation unit
14 Correction unit
15 Movement amount calculation unit
16 Addition unit
21 Spatial viewpoint coordinate acquisition unit
22 Parallax image acquisition unit
23 Parallax image display unit
51 Acceleration detection unit
52 Coordinate ratio designation unit
61 Distance measuring unit

62    Switching unit

**Claims**

1.  An information processing apparatus comprising:

    an acquisition unit that performs face detection on a basis of a captured image and acquires face detection information including face frame information and viewpoint position information on a basis of a face detection result;
    a reference point calculation unit that calculates a reference point in a face frame indicated by the face frame information; and
    a correction unit that corrects the viewpoint position information according to a movement amount of the reference point.

2.  The information processing apparatus according to claim 1, wherein
    the correction unit accumulates the movement amount of the reference point during a period required to acquire the face detection information, and corrects the viewpoint position information according to the accumulated movement amount of the reference point.

3.  The information processing apparatus according to claim 1, wherein
    the correction unit accumulates the movement amount of the reference point during a period required from acquisition of first face detection information to acquisition of second face detection information, which is face detection information subsequent to the first face detection information, and corrects the viewpoint position information included in the first face detection information according to the accumulated movement amount of the reference point.

4.  The information processing apparatus according to claim 2, wherein
    the correction unit accumulates the movement amount of the reference point between frames.

5.  The information processing apparatus according to claim 1, wherein
    the reference point calculation unit calculates, as the reference point, a center of gravity point existing in an area of a predetermined color component in the face frame.

6.  The information processing apparatus according to claim 5, wherein
    the predetermined color component includes a skin color component.

7.  The information processing apparatus according to claim 1, wherein
    the correction unit sets weighting according to the movement amount of the reference point, and weights and adds the viewpoint position information included in the face detection information and position information on the reference point, using the set weighting.

8.  The information processing apparatus according to claim 1, further comprising
    a distance measuring unit that measures a distance to a user who is a target for face detection,
    the information processing apparatus being configured to selectively output either the viewpoint position information generated by the acquisition unit or the viewpoint position information corrected by the correction unit, according to a distance measurement result of the distance measuring unit.

9.  The information processing apparatus according to claim 8, which is configured to:

    output the viewpoint position information corrected by the correction unit when the distance measurement result is smaller than a threshold value; and
    output the viewpoint position information generated by the acquisition unit when the distance measurement result is greater than the threshold value.

10. The information processing apparatus according to claim 1, further comprising
    an imaging unit that acquires the captured image.

11. The information processing apparatus according to claim 10, wherein

the imaging unit includes the reference point calculation unit.

12. The information processing apparatus according to claim 10, wherein
the imaging unit is capable of imaging at 1000 frames per second (fps) or higher.

13. The information processing apparatus according to claim 1, further comprising
a stereoscopic image acquisition unit that generates a stereoscopic image using viewpoint positions corrected by the correction unit.

14. The information processing apparatus according to claim 13, further comprising
a display on which the stereoscopic image is displayed.

15. An information processing method comprising:

performing, by an acquisition unit, face detection on a basis of a captured image and acquiring face detection information including face frame information and viewpoint position information on a basis of a face detection result;
calculating, by a reference point calculation unit, a reference point in a face frame indicated by the face frame information; and
correcting, by a correction unit, the viewpoint position information according to a movement amount of the reference point.

16. A program that causes a computer to execute an information processing method comprising:

performing, by an acquisition unit, face detection on a basis of a captured image and acquiring face detection information including face frame information and viewpoint position information on a basis of a face detection result;
calculating, by a reference point calculation unit, a reference point in a face frame indicated by the face frame information; and
correcting, by a correction unit, the viewpoint position information according to a movement amount of the reference point.

# FIG. 1

EP 3 852 052 A1

## FIG. 2

# FIG. 3

10

| 11 | 12 | 14 |
|---|---|---|
| IMAGE SENSOR | FACE DETECTION UNIT | 16 |
| 13 CENTER-OF-GRAVITY CALCULATION UNIT | | 15 MOVEMENT AMOUNT CALCULATION UNIT |

FIG. 4

EP 3 852 052 A1

# FIG. 5

A

U

x1          x2

DETECTION TIME t

FACE MOVEMENT DURING TIME t

B

U

CENTER-OF-GRAVITY ADDITION AMOUNT ΔA

x1          x2

## FIG. 6

EP 3 852 052 A1

# FIG. 7

```
                          START

        ST12                                      ST11
CALCULATE CENTER OF GRAVITY POINT      INPUT CAPTURED IMAGE TO
IN CENTER-OF GRAVITY CALCULATION UNIT  FACE DETECTION UNIT
                                       FROM IMAGE SENSOR

        ST13                                      ST17
CALCULATE DIFFERENCE VALUE WITH           HAS FACE
RESPECT TO PREVIOUS FRAME AND ADD      DETECTION INFORMATION      No
CALCULATED DIFFERENCE VALUE TO TOTAL   BEEN UPDATED?
MOVEMENT AMOUNT OF CENTER OF
GRAVITY POINT IN MOVEMENT AMOUNT           Yes
CALCULATION UNIT

        ST14                          ST19                  ST18
     RESET FLAG=1?      No           RESET FLAG=1         RESET FLAG=0

        Yes                                  ST20
        ST15                         UPDATE VIEWPOINT
RESET VALUE OF FINAL DIFFERENCE      POSITION INFORMATION
IN CENTER OF GRAVITY
                                             ST21
        ST16                         TRANSFER VIEWPOINT POSITION
TRANSFER VALUE OF FINAL DIFFERENCE   INFORMATION TO ADDITION UNIT
IN CENTER OF GRAVITY TO ADDITION UNIT

        ST22
ADD VALUE OF FINAL DIFFERENCE IN
CENTER OF GRAVITY TO VIEWPOINT POSITION
INFORMATION AND OUTPUT ADDED VIEWPOINT
POSITION INFORMATION IN ADDITION UNIT

                          END
```

# FIG. 8

Legend:
- – – – – VIEWPOINT COORDINATE AT FACE DETECTION
- –––·–· VIEWPOINT COORDINATE OBTAINED BY ADDING MOVEMENT AMOUNT
- ——— COORDINATE OF CENTER OF GRAVITY IN FACE FRAME
- ☆ OUTPUT OF FACE DETECTION RESULT

L1

L2

MOVING DISTANCE DURING FACE DETECTION PROCESSING TIME IS ADDED

L3

FACE DETECTION PROCESS

MOVING DISTANCE DURING FACE DETECTION PROCESSING TIME

EP 3 852 052 A1

# FIG. 9

A

41

42

B

43

## FIG. 10

10A

*FIG. 11*

START

ST31
INPUT CAPTURED IMAGE
TO FACE DETECTION UNIT
FROM IMAGE SENSOR

ST33
INPUT CAPTURED IMAGE TO
CENTER-OF-GRAVITY CALCULATION
UNIT FROM IMAGE SENSOR

ST32
OUTPUT FACE DETECTION
INFORMATION FROM FACE
DETECTION UNIT

ST34
HAS FACE
FRAME INFORMATION
BEEN UPDATED?

No

Yes

ST35
SET FACE FRAME INFORMATION AS
SEARCH FRAME FOR CENTER OF
GRAVITY POINT IN CENTER-OF-
GRAVITY CALCULATION UNIT

ST36
CALCULATE CENTER OF GRAVITY POINT IN SEARCH
FRAME IN CENTER-OF-GRAVITY CALCULATION UNIT

ST37
CALCULATE DIFFERENCE VALUE BETWEEN
COORDINATES OF CENTER OF GRAVITY POINT
OF PREVIOUS FRAME AND COORDINATES
OF CENTER OF GRAVITY POINT OF CURRENT
FRAME IN ACCELERATION DETECTION UNIT

ST38
DESIGNATE WEIGHTING
RATIO ACCORDING
TO ACCELERATION

ST39
PERFORM WEIGHTING ADDITION
UTILIZING WEIGHTING RATIO AND
GENERATE VIEWPOINT POSITION
INFORMATION TO BE OUTPUT IN
COORDINATE RATIO SELECTION UNIT

END

# FIG. 12

10B

# FIG. 13

```
      ( DISTANCE MEASURING PROCESS )
                    |
                    v            ST41
  +----------------------------------------+
  |   GENERATE DISTANCE MEASUREMENT        |
  |   DATA ON BASIS OF FACE DETECTION      |
  |   INFORMATION IN DISTANCE              |
  |   MEASURING UNIT                       |
  +----------------------------------------+
                    |
                    v            ST42
  +----------------------------------------+
  |   READ DISTANCE MEASUREMENT            |
  |   DATA IN SWITCHING UNIT               |
  +----------------------------------------+
                    |
                    v
              ( RETURN )
```

## FIG. 14

START

ST51
INPUT CAPTURED IMAGE
TO FACE DETECTION UNIT
FROM IMAGE SENSOR

ST52
ACQUIRE FACE DETECTION
INFORMATION ON BASIS
OF CAPTURED IMAGE IN
FACE DETECTION UNIT

ST53
DISTANCE MEASURING
PROCESS

ST54
READ DISTANCE
MEASUREMENT DATA
IN SWITCHING UNIT

ST55
INPUT CAPTURED IMAGE
TO CENTER-OF-GRAVITY
CALCULATION UNIT
FROM IMAGE SENSOR

ST56
HAS FACE
FRAME INFORMATION
BEEN UPDATED? — No

Yes

ST57
SET FACE FRAME INFORMATION
AS SEARCH FRAME FOR CENTER
OF GRAVITY POINT IN CENTER-OF-
GRAVITY CALCULATION UNIT

ST58
CALCULATE CENTER OF
GRAVITY POINT IN SEARCH FRAME
IN CENTER-OF-GRAVITY
CALCULATION UNIT

ST59
CALCULATE DIFFERENCE IN
CENTER OF GRAVITY IN MOVEMENT
AMOUNT CALCULATION UNIT

ST60
ADD FINAL TOTAL AMOUNT OF
DIFFERENCE IN CENTER OF
GRAVITY TO VIEWPOINT POSITION
INFORMATION IN ADDITION UNIT

ST61
DISTANCE
MEASUREMENT DATA
≥ SET VALUE? — No

Yes

ST62
OUTPUT UNCORRECTED
VIEWPOINT POSITION
INFORMATION FROM
SWITCHING UNIT

ST63
OUTPUT CORRECTED
VIEWPOINT POSITION
INFORMATION FROM
SWITCHING UNIT

END

FIG. 15

EP 3 852 052 A1

# FIG. 16

EP 3 852 052 A1

# FIG. 17

EP 3 852 052 A1

## FIG. 18

## INTERNATIONAL SEARCH REPORT

| | International application No. |
|---|---|
| | PCT/JP2019/026985 |

### A. CLASSIFICATION OF SUBJECT MATTER
Int. Cl. G06T7/00(2017.01)i, G06T7/70(2017.01)i, H04N13/305(2018.01)i, H04N13/366(2018.01)i

According to International Patent Classification (IPC) or to both national classification and IPC

### B. FIELDS SEARCHED

Minimum documentation searched (classification system followed by classification symbols)
Int. Cl. G06T7/00, G06T7/70, H04N13/305, H04N13/366

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-116221 A (SAMSUNG ELECTRONICS CO., LTD.) 23 June 2016, paragraphs [0023]-[0075] & US 2016/0173863 A1, paragraphs [0037]-[0095] & EP 3037922 A1 & KR 10-2016-0070465 A & CN 105704471 A | 1-16 |
| A | JP 2017-054503 A (SAMSUNG ELECTRONICS CO., LTD.) 16 March 2017, paragraphs [0056]-[0063] & US 2017/0068315 A1, paragraphs [0067]-[0074] & EP 3139303 A1 & KR 10-2017-0029166 A & CN 106504271 A | 1-16 |

☐ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12.09.2019 | 24.09.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014195141 A

**Non-patent literature cited in the description**

- Pyramidal Implementation of the Lucas Kanade Feature Tracker Description of the algorithm. **JEAN-YVES BOUGUET.** OpenCV Documents. Intel Corporation Microprocessor Research Labs, 2000